# EUROPEAN PATENT APPLICATION

(11) **EP 4 503 671 A1**
(43) Date of publication of application: **05.02.2025**
(21) Application number: 22934284.5
(22) Date of filing: 31.03.2022
(51) Int. Cl.: H04W 4/40

(54) **SIDELINK COMMUNICATION METHOD, APPARATUS, AND STORAGE MEDIUM**

(71) Applicant: Beijing Xiaomi Mobile Software Co., Ltd., Beijing 100085 (CN)
(72) Inventor: YANG, Xing, Beijing 100085 (CN)
(74) Representative: Stöckeler, Ferdinand
(86) International application number: PCT/CN2022/084682
(87) International publication number: WO 2023/184447

(57) **Abstract**

Disclosed in embodiments of the present invention are a Sidelink communication method, an apparatus, and a storage medium, which can be applied to systems such as Internet of Vehicles, V2X and V2V. The method is performed by a first terminal, and comprises: receiving configuration indication information sent by a network side device or a second terminal; and determining, according to the configuration indication information, a target Sidelink resource used for Sidelink transmission among a plurality of candidate Sidelink resources. Therefore, when the first terminal and the second terminal execute a Sidelink service, the Sidelink transmission is performed on the determined target Sidelink resource, so that the execution of the Sidelink service can be ensured, data loss is avoided, energy consumption can be saved, and resource waste can be avoided.

## Description

### FIELD

The present invention relates to the technical field of communications, in particular to a sidelink communication method, an apparatus, and a storage medium.

### BACKGROUND

In order to support direction communication between terminals, a sidelink communication way is introduced, by which sidelink communication can be used between the terminals through a PCS interface. Sidelink supports various transmission modes such as unicast, multicast and broadcast.

In the related art, information sending and receiving on a specific sidelink resource (such as a frequency band) are only supported between the terminals, if information sending and receiving on a plurality of sidelink resources are supported, it is impossible to determine how to use the plurality of sidelink resources for different sidelink services, which is an urgent problem to be solved.

### SUMMARY

Embodiments of the present invention provide a sidelink communication method, an apparatus, and a storage medium, which can be applied to Internet of Vehicles, such as vehicle to everything (V2X) communication, long term evolution-vehicle (LTE-V) and vehicle to vehicle (V2V) communication, or can be applied to the fields, such as intelligent driving and intelligent network connected vehicles. When executing a sidelink service, both of a first terminal and a second terminal perform sidelink transmission on a determined target sidelink resource, so that the execution of the sidelink service can be ensured, data loss is avoided, energy consumption can be reduced, and resource waste can be avoided.

In a first aspect, an embodiment of the present invention provides a sidelink communication method, the method is performed by a first terminal, and the method includes: receiving configuration indication information sent by a network side device or a second terminal; and determining, according to the configuration indication information, a target sidelink resource used for sidelink transmission among a plurality of candidate sidelink resources.

In the technical solution, the first terminal receives the configuration indication information sent by the network side device or the second terminal, determines the target sidelink resource used for the sidelink transmission among the plurality of candidate sidelink resources, and performs the sidelink transmission on the target sidelink resource, which includes: sending sidelink information corresponding to a to-be-executed sidelink service to the second terminal on the target sidelink resource, or, receiving sidelink information sent by the second terminal and corresponding to a to-be-executed sidelink service on the target sidelink resource. Thus, it can be ensured that the sidelink information corresponding to the to-be-executed sidelink service of the first terminal is accurately received and sent, and data loss is avoided; and during reception, the sidelink information corresponding to the to-be-executed sidelink service may be received on the determined target sidelink resource, it is unnecessary for the first terminal to perform reception on a plurality of sidelink resources, so that the electric energy of the first terminal can be saved, and resource waste can be avoided.

In a second aspect, an embodiment of the present invention provides a sidelink communication method, the method is performed by a second terminal, and the method includes: receiving resource configuration information sent by a first terminal, where the resource configuration information is information used for indicating a target sidelink resource used for sidelink transmission of the second terminal; and determining the target sidelink resource among a plurality of candidate sidelink resources according to the resource configuration information.

In a third aspect, an embodiment of the present invention provides a sidelink communication method, the method is performed by a network side device, and the method includes: sending configuration indication information to a first terminal, where the configuration indication information is used for indicating a target sidelink resource used for sidelink transmission among a plurality of candidate sidelink resources of the first terminal.

In a fourth aspect, an embodiment of the present invention provides a communication apparatus, the information transmission apparatus has parts or all of functions of the first terminal in the method in the above-mentioned first aspect, for example, the communication apparatus may have functions in parts or all of embodiments of the present invention or separately have functions in any one of the embodiments of the present invention. The functions may be achieved by hardware or achieved by executing corresponding software through the hardware. The hardware or software includes one or more units or modules corresponding to the above-mentioned functions.

In an implementation, the communication apparatus may structurally include a transceiving module and a processing module. The processing module is configured to support the communication apparatus to execute the corresponding functions in the above-mentioned method. The transceiving module is configured to support communication between the communication apparatus and each of other devices. The communication apparatus may further include a storage module configured to be coupled with the transceiving module and the processing module, and the storage module stores a necessary computer program and data of the communication apparatus.

As an example, the processing module may be a processor, the transceiving module may be a transceiver or a communication interface, and the storage module may be a memory.

In an implementation, the communication apparatus includes a transceiving module configured to receive configuration indication information sent by a network side device or a second terminal; and a processing module configured to determine, according to the configuration indication information, a target sidelink resource used for sidelink transmission among a plurality of candidate sidelink resources.

In a fifth aspect, an embodiment of the present invention provides a communication apparatus, the transmission apparatus has parts or all of functions of the second terminal in the method in the above-mentioned second aspect, for example, the communication apparatus may have functions in parts or all of embodiments of the present invention or separately have functions in any one of the embodiments of the present invention. The functions may be achieved by hardware or achieved by executing corresponding software through the hardware. The hardware or software includes one or more units or modules corresponding to the above-mentioned functions.

In an implementation, the communication apparatus may structurally include a transceiving module and a processing module. The processing module is configured to support the communication apparatus to execute the corresponding functions in the above-mentioned method. The transceiving module is configured to support communication between the communication apparatus and each of other devices. The communication apparatus may further include a storage module configured to be coupled with the transceiving module and the processing module, and the storage module stores a necessary computer program and data of the communication apparatus.

In an implementation, the communication apparatus includes a transceiving module configured to receive resource configuration information sent by a first terminal, where the resource configuration information is used for indicating a target sidelink resource used for sidelink transmission of the second terminal; a processing module configured to determine the target sidelink resource among a plurality of candidate sidelink resources according to the resource configuration information.

In a sixth aspect, an embodiment of the present invention provides a communication apparatus, the communication apparatus has parts or all of functions of the network side device in the method in the above-mentioned third aspect, for example, the communication apparatus may have functions in parts or all of embodiments of the present invention or separately have functions in any one of the embodiments of the present invention. The functions may be achieved by hardware or achieved by executing corresponding software through the hardware. The hardware or software includes one or more units or modules corresponding to the above-mentioned functions.

In an implementation, the communication apparatus may structurally include a transceiving module and a processing module. The processing module is configured to support the communication apparatus to execute the corresponding functions in the above-mentioned method. The transceiving module is configured to support communication between the communication apparatus and each of other devices. The communication apparatus may further include a storage module configured to be coupled with the transceiving module and the processing module, and the storage module stores a necessary computer program and data of the communication apparatus.

In an implementation, the communication apparatus includes a transceiving module configured to send configuration indication information to a first terminal, where the configuration indication information is used for indicating a target sidelink resource used for sidelink transmission among a plurality of candidate sidelink resources of the first terminal.

In a seventh aspect, an embodiment of the present invention provides a communication apparatus, the communication apparatus includes a processor which, when calling a computer program in a memory, performs the method in the above-mentioned first or second aspect.

In an eighth aspect, an embodiment of the present invention provides a communication apparatus, the communication apparatus includes a processor which, when calling a computer program in a memory, performs the method in the above-mentioned third aspect.

In a ninth aspect, an embodiment of the present invention provides a communication apparatus, the communication apparatus includes a processor and a memory having a computer program stored thereon. The processor is configured to execute the computer program stored in the memory, to cause the communication apparatus to perform the method in the above-mentioned first or second aspect.

In a tenth aspect, an embodiment of the present invention provides a communication apparatus, the communication apparatus includes a processor and a memory having a computer program stored thereon. The processor is configured to execute the computer program stored in the memory, to cause the communication apparatus to perform the method in the above-mentioned third aspect.

In an eleventh aspect, an embodiment of the present invention provides a communication apparatus, the apparatus includes a processor and an interface circuit, the interface circuit is configured to receive code instructions and transmit the code instructions to the processor, and the processor is configured to run the code instructions to perform the method in the above-mentioned first or second aspect.

In a twelfth aspect, an embodiment of the present invention provides a communication apparatus, the apparatus includes a processor and an interface circuit, the interface circuit is configured to receive code instructions and transmit the code instructions to the processor, and the processor is configured to run the code instructions to perform the method in the above-mentioned third aspect.

In a thirteenth aspect, an embodiment of the present invention provides a sidelink communication system, the system includes the sidelink communication apparatus in the fourth or fifth aspect and the sidelink communication apparatus in the sixth aspect, or the system includes the communication apparatus in the seventh aspect and the communication apparatus in the eighth aspect, or the system includes the communication apparatus in the ninth aspect or the communication apparatus in the tenth aspect, or the system includes the communication apparatus in the eleventh aspect or the communication apparatus in the twelfth aspect.

In a fourteenth aspect, an embodiment of the present invention provides a computer-readable storage medium for storing instructions used by the above-mentioned first terminal. When the instructions are executed, the first terminal is enabled to perform the method in the above-mentioned first or second aspect.

In a fifteenth aspect, an embodiment of the present invention provides a readable storage medium for storing instructions used by the above-mentioned second terminal. When the instructions are executed, the second terminal is enabled to perform the method in the above-mentioned third aspect.

In a sixteenth aspect, the present invention further provides a computer program product including a computer program that, when running on a computer, causes the computer to perform the method in the above-mentioned first or second aspect.

In a seventeenth aspect, the present invention further provides a computer program product including a computer program that, when running on a computer, causes the computer to perform the method in the above-mentioned third aspect.

In an eighteenth aspect, the present invention provides a chip system, the chip system includes at least one processor and an interface that are used for supporting a terminal to achieve the functions involved in the first or second aspect, for example, at least one of data and information involved in the above-mentioned method is determined or processed. In a possible design, the chip system further includes a memory configured to store a necessary computer program and data of the terminal. The chip system may consist of a chip or include a chip and other discrete devices.

In a nineteenth aspect, the present invention provides a chip system, the chip system includes at least one processor and an interface that are used for supporting a network side device to achieve the functions involved in the third aspect, for example, at least one of data and information involved in the above-mentioned method is determined or processed. In a possible design, the chip system further includes a memory configured to store a necessary computer program and data of the network side device. The chip system may consist of a chip or include a chip and other discrete devices.

In a twentieth aspect, the present invention provides a computer program that, when running on a computer, enables the computer to perform the method in the above-mentioned first or second aspect.

In a twenty-first aspect, the present invention provides a computer program that, when running on a computer, enables the computer to perform the method in the above-mentioned third aspect.

### BRIEF DESCRIPTION OF THE DRAWINGS

In order to describe the technical solutions in the embodiments of the present invention or the background art more clearly, the accompanying drawings required for describing the embodiments of the present invention or the background art will be described below.
FIG. 1 is an architecture diagram of a communication system provided in an embodiment of the present invention;
FIG. 2 is a flow chart of a sidelink communication method provided in an embodiment of the present invention;
FIG. 3 is a flow chart of another sidelink communication method provided in an embodiment of the present invention;
FIG. 4 is a flow chart of another sidelink communication method provided in an embodiment of the present invention;
FIG. 5 is a flow chart of another sidelink communication method provided in an embodiment of the present invention;
FIG. 6 is a flow chart of another sidelink communication method provided in an embodiment of the present invention;
FIG. 7 is a flow chart of another sidelink communication method provided in an embodiment of the present invention;
FIG. 8 is a flow chart of another sidelink communication method provided in an embodiment of the present invention;
FIG. 9 is a flow chart of another sidelink communication method provided in an embodiment of the present invention;
FIG. 10 is a flow chart of another sidelink communication method provided in an embodiment of the present invention;
FIG. 11 is a flow chart of another sidelink communication method provided in an embodiment of the present invention;
FIG. 12 is a flow chart of another sidelink communication method provided in an embodiment of the present invention;
FIG. 13 is a flow chart of another sidelink communication method provided in an embodiment of the present invention;
FIG. 14 is a flow chart of another sidelink communication method provided in an embodiment of the present invention;
FIG. 15 is a flow chart of another sidelink communication method provided in an embodiment of the present invention;
FIG. 16 is a flow chart of another sidelink communication method provided in an embodiment of the present invention;
FIG. 17 is a structural diagram of a communication apparatus provided in an embodiment of the present invention;
FIG. 18 is a structural diagram of a communication apparatus provided in an embodiment of the present invention; and
FIG. 19 is a structural diagram of a chip provided in an embodiment of the present invention.

### DETAILED DESCRIPTION

For facilitating understanding, terms involved in the present invention are introduced firstly.

### 1. vehicle-to-everything (V2X) communication

V2X communication refers to communication between a vehicle and anything outside, and V2X communication may include, but is not limited to: vehicle to vehicle (V2V) communication, vehicle to pedestrian (V2P) communication, vehicle to infrastructure (V2I) communication, and vehicle to network (V2N) communication.

In order to better understand a sidelink communication method, an apparatus and a storage medium disclosed in embodiments of the present invention, a communication system applicable to the embodiments of the present invention is described firstly as below.

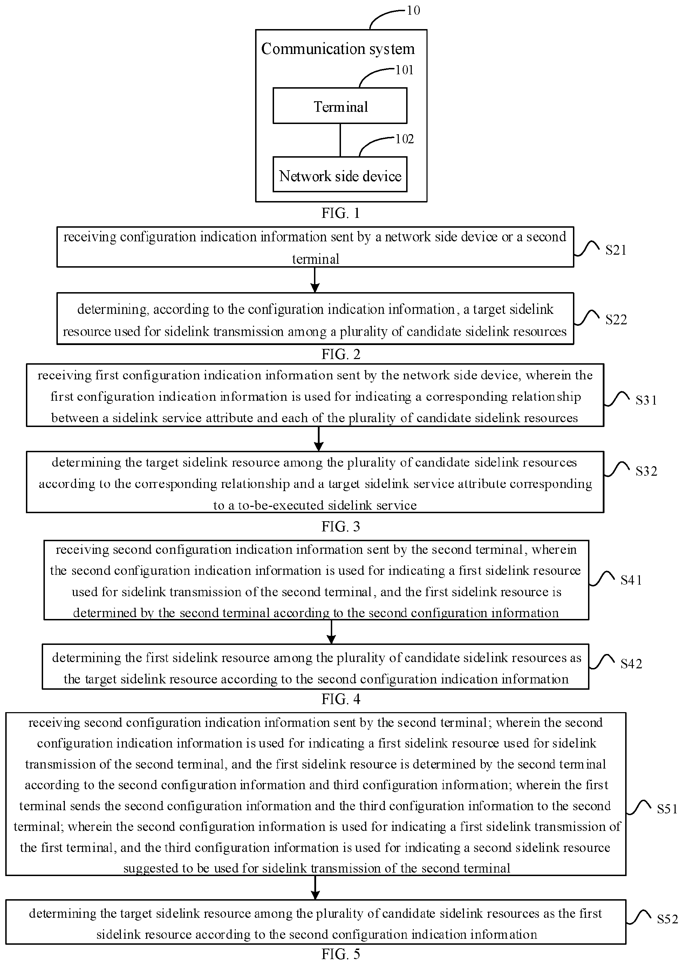

Refer to FIG. 1 which is a schematic architecture diagram of a communication system 10 provided in an embodiment of the present invention, the communication system 10 may include, but is not limited to a network side device and a terminal, the number and forms of devices shown in FIG. 1 are only intended to illustrate, rather to constitute limitations on the embodiment of the present invention, and in actual applications, two or more network side devices and two or more terminals may be included. The communication system shown in FIG. 1 is exampled to include one network side device 101 and one terminal 102.

It should be noted that the technical solution in the embodiments of the present invention can be applied to various communication systems, such as a long term evolution (LTE) system, a 5th generation (5G) mobile communication system, a 5G new radio (NR) system, or other future novel mobile communication systems. It should be further noted that the sidelink in the embodiments of the present invention may also be referred to as side link, direct connection link or direct communication link, etc.

The network side device 101 in the embodiments of the present invention is an entity for transmitting or receiving signals at a network side. For example, the network side device 101 may be an evolved NodeB (eNB), a transmission reception point (TRP), a next generation NodeB (gNB) in an NR system, a base station in other future mobile communication systems or an access node in a wireless fidelity (WiFi) system, etc. In the embodiments of the present invention, a specific technology and a specific device form that are adopted by the network side device are not limited. The network side device provided in the embodiments of the present invention may be composed of a central unit (CU) and a distributed unit (DU). The CU may also be referred to as a control unit, protocol layers of the network side device, such as a base station, may be split by adopting a CU-DU structure, functions of parts of the protocol layers are centrally controlled by the CU, and functions of parts or all of the remaining protocol layers are distributed in the DU, and the DU is centrally controlled by the CU.

The terminal 102 in the embodiments of the present invention is an entity, such as a mobile phone, for receiving or transmitting signals. The terminal may also be referred to as a terminal, user equipment (UE), a mobile station (MS), a mobile terminal (MT), etc. The terminal may be a car with a communication function, a smart car, a mobile phone, a wearable device, a tablet computer (Pad), a computer with a radio transceiving function, a virtual reality (VR) terminal, an augmented reality (AR) terminal, a radio terminal in industrial control, a radio terminal in self-driving, a radio terminal in remote medical surgery, a radio terminal in a smart grid, a radio terminal in transportation safety, a radio terminal in a smart city, a radio terminal in a smart home, etc. In the embodiments of the present invention, a specific technology and a specific device form that are adopted by the terminal in the embodiments of the present invention are not limited.

It can be understood that the communication system described in the embodiments of the present invention is intended to describe the technical solution in the embodiments of the present invention more clearly, rather than to constitute limitations on the technical solution provided in the embodiments of the present invention. It can be known by those of ordinary skill in the art that, with the evolution of a system architecture and the emergence of new service scenarios, the technical solution provided in the embodiments of the present invention is equally applicable to similar technical problems.

It should be noted that transmission referred in the embodiments of the present invention may include sending and/or receiving, and a sidelink resource may be a sidelink frequency band.

A sidelink communication method, an apparatus and a storage medium provided in the present invention will be introduced in detail below in conjunction with the accompanying drawings.

Refer to FIG. 2 which is a flow chart of a sidelink communication method provided in an embodiment of the present invention.

As shown in FIG. 2, an embodiment of the present invention provides a sidelink communication method, the method is performed by a first terminal, and the method may include, but is not limited to the following steps.

S21: configuration indication information sent by a network side device or a second terminal is received.

In response to the configuration indication information being sent by a network side device, the network side device may send the configuration indication information to the first terminal through a system message or an RRC (Radio Resource Control) reconfiguration message. In response to the configuration indication information being sent by the second terminal, the second terminal may send the configuration indication information to the first terminal through a PCS (interface)-RRC message.

S22: a target sidelink resource used for sidelink transmission among a plurality of candidate sidelink resources is determined according to the configuration indication information.

In the related art, information sending and receiving on a specific sidelink resource (such as a frequency band) are only supported between the terminals, if information sending and receiving on a plurality of sidelink resources are supported, it is impossible to determine how to use the plurality of sidelink resources for different sidelink services.

In this embodiment of the present invention, the first terminal may receive the configuration indication information from the network side device or the second terminal and determine, according to the configuration indication information, the target sidelink resource used for sidelink transmission among two or more candidate sidelink resources. In a possible application scenario, by using the solution, the target sidelink resource used for sidelink transmission for the different sidelink services may be determined, so that the execution of the different sidelink services can be ensured, and data loss is avoided. In the embodiments of the present invention, the transmission may include sending and/or receiving.

The plurality of candidate sidelink resources are a plurality of sidelink resources supported by the first terminal and used for sidelink transmission with the second terminal.

In this embodiment of the present invention, in the case that the first terminal receives the configuration information sent by the network side device, the configuration indication information sent by the network side device may indicate the target sidelink resource used for sidelink transmission of the first terminal and the second terminal. The network side device may determine, according to the received information of the target sidelink resource sent by the second terminal, the target sidelink resource used for sidelink transmission of the first terminal and the second terminal, and further send the target sidelink resource to the first terminal. Thus, the first terminal and the second terminal may perform sidelink transmission on the same target sidelink resource; on one hand, the execution of the different sidelink services can be ensured, and data loss is avoided; and on the other hand, the first terminal or the second terminal may receive, on the target sidelink resource, the information sent by the second terminal or the first terminal, electric energy can be saved, and resource waste can be avoided.

Alternatively, the network side device may determine, according to other information, the target sidelink resource used for sidelink transmission of the first terminal and the second terminal, for example, the network side device specifies one or more sidelink resources as the target sidelink resource among the plurality of sidelink resources reported by the first terminal, supported by the first terminal and used for sidelink transmission with the second terminal, the first terminal may send the target sidelink resource to the second terminal after determining the target sidelink resource, or the network side device may further send the specified target sidelink resource to the second terminal. Thus, the first terminal and the second terminal may perform sidelink transmission on the same target sidelink resource; on one hand, the execution of the different sidelink services can be ensured, and data loss is avoided; and on the other hand, the first terminal or the second terminal may receive, on the target sidelink resource, the information sent by the second terminal or the first terminal, electric energy can be saved, and resource waste can be avoided.

In this embodiment of the present invention, in the case that the first terminal receives the configuration information sent by the second terminal, the second terminal may randomly select one or more candidate sidelink resources among the plurality of candidate sidelink resources supported by the second terminal and used for sidelink transmission with the first terminal, determine the one or more candidate sidelink resources as the target sidelink resource used for sidelink transmission with the first terminal, and send the configuration indication information including the information to the first terminal, and after receiving the configuration indication information sent by the second terminal, the first terminal may determine the target sidelink resource among the plurality of candidate sidelink resources supported by the first terminal and used for sidelink transmission with the second terminal. Thus, the first terminal and the second terminal may perform sidelink transmission on the same target sidelink resource; on one hand, the execution of the different sidelink services can be ensured, and data loss is avoided; and on the other hand, the first terminal or the second terminal may receive, on the target sidelink resource, the information sent by the second terminal or the first terminal, electric energy can be saved, and resource waste can be avoided.

Alternatively, the second terminal may determine, according to other ways, the target sidelink resource used for sidelink transmission with the first terminal, for example, the second terminal may receive related information of the network side device, and determine the target sidelink resource among the plurality of candidate sidelink resources supported by the second terminal and used for sidelink transmission with the first terminal, or the second terminal receives the related information of the first terminal, determine the target sidelink resource among the plurality of candidate sidelink resources supported by the second terminal and used for sidelink transmission with the first terminal, and then send the configuration indication information including the target sidelink resource to the first terminal. Thus, the first terminal and the second terminal may perform sidelink transmission on the same target sidelink resource; on one hand, the execution of the different sidelink services can be ensured, and data loss is avoided; and on the other hand, the first terminal or the second terminal may receive, on the target sidelink resource, the information sent by the second terminal or the first terminal, electric energy can be saved, and resource waste can be avoided.

In this embodiment of the present invention, the target sidelink resource may be selected from one or more of the plurality of candidate sidelink resources. It can be understood that, in the case that the target sidelink resource is selected from one of the plurality of candidate sidelink resources, the first terminal and the second terminal may perform sidelink transmission on the determined candidate sidelink resource, so that the execution of the different sidelink services can be ensured, electric energy can be saved, and resource waste can be avoided. In the case that the target sidelink resource is selected from more of the plurality of candidate sidelink resources, sidelink transmission is performed on the plurality of candidate sidelink resources, and if transmission fails on one candidate sidelink resource, and transmission may be performed on other candidate sidelink resources, so that the execution of the sidelink services can be ensured, and data loss is avoided.

In some embodiments, the sidelink transmission method provided in the embodiments of the present invention further includes: communication with the second terminal is performed on the target sidelink resource. The communication in the embodiments of the present invention may include sending and/or receiving, that is, sidelink information corresponding to a to-be-executed sidelink service is sent to the second terminal on the target sidelink resource; or sidelink information sent by the second terminal and corresponding to a to-be-executed sidelink service is received on the target sidelink resource.

In this embodiment of the present invention, the first terminal receives the configuration indication information of the network side device or the second terminal, determines the target sidelink resource used for sidelink transmission, and performs sidelink transmission on the target sidelink resource, which includes: sending the sidelink information corresponding to the to-be-executed sidelink service to the second terminal on the target sidelink resource; or receiving the sidelink information sent by the second terminal and corresponding to the to-be-executed sidelink service on the target sidelink resource. Thus, it can be ensured that the sidelink information corresponding to the to-be-executed sidelink service of the first terminal is accurately received and sent, and data loss is avoided; and during reception, the sidelink information corresponding to the to-be-executed sidelink service may be received on the determined target sidelink resource, it is unnecessary for the first terminal to receive on a plurality of sidelink resources, so that the electric energy of the first terminal can be saved, and resource waste can be avoided.

Refer to FIG. 3 which is a flow chart of another sidelink communication method provided in an embodiment of the present invention.

As shown in FIG. 3, an embodiment of the present invention provides another sidelink communication method, the method is performed by a first terminal, and the method may include, but is not limited to the following steps.

S31: first configuration indication information sent by the network side device is received; where the first configuration indication information is used for indicating a corresponding relationship between a sidelink service attribute and each of the plurality of candidate sidelink resources.

The first configuration indication information indicates the corresponding relationship between the sidelink service attribute and each of the plurality of candidate sidelink resources. In the case that there are a plurality of sidelink service attributes, it can be indicated that the different sidelink service attributes respectively correspond to the different sidelink resources, or it can also indicated that the different sidelink service attributes correspond to the same sidelink resource; and in the case that there in one sidelink service attribute, it can be indicated that the sidelink service attribute corresponds to one or more of the plurality of sidelink resources.

The sidelink resource may be a sidelink frequency band.

In this embodiment of the present invention, the network side device may send the first configuration indication information indicating the corresponding relationship between the sidelink service attribute and each of the plurality of candidate sidelink resources to the first terminal through a system message or an RRC reconfiguration message, and after receiving the system message or the RRC reconfiguration message, the first terminal may determine the corresponding relationship between the sidelink service attribute and each of the plurality of candidate sidelink resources according to the first configuration indication information.

In some embodiments, the sidelink service attribute includes at least one of: a quality of service (QoS); a sidelink destination address; a transmitting file Tx profile; a logic channel for sidelink data transmission; or a carrier for of sidelink data transmission.

The transmitting file Tx profile is used for indicating which version, such as Release 12 of a protocol is used for sending by the first terminal or which feature is used for sending, where the feature may be whether to start DRX (Discontinuous Reception).

S32: the target sidelink resource among the plurality of candidate sidelink resources is determined according to the corresponding relationship and a target sidelink service attribute corresponding to a to-be-executed sidelink service.

The target sidelink resource is determined among the plurality of candidate sidelink resources. In the embodiments of the present invention, the first terminal receives the first configuration indication information of the network side device, determines the corresponding relationship between the sidelink service attribute and each of the plurality of candidate sidelink resources, then determines the target sidelink resource among the plurality of candidate sidelink resources according to the target sidelink service attribute corresponding to the to-be-executed sidelink service, and then performs data transmission of the to-be-executed sidelink service on the target sidelink resource.

In some embodiments, the sidelink communication method provided in the embodiments of the present invention further includes: communication with the second terminal is performed on the target sidelink resource. The communication may include sending and/or receiving, that is, the sidelink information corresponding to the to-be-executed sidelink service is sent to the second terminal on the target sidelink resource; or the sidelink information sent by the second terminal and corresponding to the to-be-executed sidelink service is received on the target sidelink resource.

In some embodiments, the sidelink communication method provided in the embodiments of the present invention further includes: the first terminal sends first configuration information to the second terminal; where the first configuration information is used for indicating the corresponding relationship between the sidelink service attribute and each of the plurality of candidate sidelink resources.

A connection between the first terminal and the second terminal may be a unicast connection, that is, after the unicast connection is established between the first terminal and the second terminal, the first configuration information is sent in a unicast way. The first terminal may further send the first configuration information in a multicast or broadcast way, which is not limited in the embodiments of the present invention. The above-mentioned description is the same as that in the following embodiments so as to be no longer repeated.

It can be understood that, in this embodiment of the present invention, the first terminal receives the first configuration indication information of the network side device, determines the corresponding relationship between the sidelink service attribute and each of the plurality of candidate sidelink resources, and then sends the first configuration information for indicating the corresponding relationship between the sidelink service attribute and each of the plurality of candidate sidelink resources to the second terminal, and thus, the second terminal may acquire information of the corresponding relationship between the sidelink service attribute and each of the plurality of candidate sidelink resources.

It can be understood that, in this embodiment of the present invention, the first terminal may further determine the corresponding relationship between the sidelink service attribute and each of the plurality of candidate sidelink resources according to a communication protocol or voluntarily; the first terminal sends the first configuration information for indicating the corresponding relationship between the sidelink service attribute and each of the plurality of candidate sidelink resources to the second terminal; and thus, the second terminal may acquire the information of the corresponding relationship between the sidelink service attribute and each of the plurality of candidate sidelink resources. Or, in the embodiments of the present invention, the first terminal and the second terminal respectively determine the corresponding relationship between the sidelink service attribute and each of the plurality of candidate sidelink resources according to a communication protocol.

In the case that both of the first terminal and the second terminal acquire the corresponding relationship between the sidelink service attribute and each of the plurality of candidate sidelink resources, the first terminal and the second terminal may determine, according to the sidelink service attribute corresponding to the to-be-executed sidelink service, the sidelink resource used for performing the to-be-executed sidelink service, so that the execution of the sidelink service can be ensured, data loss is avoided, energy consumption can be reduced, and resource waste can be avoided.

Refer to FIG. 4 which is a flow chart of another sidelink communication method provided in an embodiment of the present invention.

As shown in FIG. 4, an embodiment of the present invention provides another sidelink communication method, the method is performed by a first terminal, and the method may include, but is not limited to the following steps.

S41: second configuration indication information sent by the second terminal is received; where the second configuration indication information is used for indicating a first sidelink resource used for sidelink transmission of the second terminal; and the first sidelink resource is determined by the second terminal according to the second configuration information.

It can be understood that, in this embodiment of the present invention, the first terminal supports the execution of sidelink transmission with the second terminal on the plurality of candidate sidelink resources, and the first terminal receives the second configuration indication information sent by the second terminal. The second configuration indication information indicates the first sidelink resource used for sidelink transmission of the second terminal, based on this, the first terminal may determine the first sidelink resource required to be used for the second terminal to send and/or receive information, and then may determine that the first sidelink resource among the plurality of candidate sidelink resources supported by the first terminal is used to perform sidelink transmission with the second terminal. The communication in the embodiments of the present invention may include sending and/or receiving.

In this embodiment of the present invention, the second terminal determines the first sidelink resource according to the second configuration information, and then sends the second configuration indication information indicating the first sidelink resource used for sidelink transmission of the second terminal to the first terminal.

In a possible implementation, the second configuration information is sent to the second terminal by the first terminal, and the second terminal receives the second configuration information sent by the first terminal, and then determines the first sidelink resource used for sidelink transmission.

The first terminal sends the second configuration information to the second terminal; and the second configuration information may be used for indicating the first sidelink resource used for sidelink transmission of the first terminal.

A connection between the first terminal and the second terminal may be a unicast connection, that is, after the unicast connection is established between the first terminal and the second terminal, the first configuration information is sent in a unicast way. The first terminal may further send the first configuration information in a multicast or broadcast way, which is not limited in the embodiments of the present invention.

The second configuration information may refer to the description in other embodiments so as to be no longer repeated herein.

In a possible implementation of the present invention, various configuration information is sent between the first terminal and the second terminal in a unicast way. That is, after the unicast connection is established between the first terminal and the second terminal, the second configuration information is sent to the second terminal, the second configuration information is used for indicating the first sidelink resource used for sidelink transmission of the first terminal, and after receiving the second configuration information, the second terminal determines to perform sidelink transmission by using the first sidelink resource. In the embodiments of the present invention, the transmission refers to sending or receiving.

Based on this, the second terminal determines to use the first sidelink resource for sidelink transmission, and the second indication information may be sent to the first terminal to inform the sidelink resource used for sidelink transmission of the second terminal.

In this embodiment of the present invention, the second terminal receives the second configuration information sent by the first terminal, the second configuration information indicates the first sidelink resource used for sidelink transmission of the first terminal, and after receiving the second configuration information, the second terminal may accept or refuse to accept a configuration of the second configuration information, in the case that the second terminal accepts the configuration of the second configuration information, the second terminal may determine the first sidelink resource according to the second configuration information, and then sends the second configuration indication information indicating the first sidelink resource used for sidelink transmission of the second terminal to the first terminal. Or, in the case that the second terminal refuses to accept the configuration of the second configuration information, the second terminal may send a refusal indication to the first terminal.

In this embodiment of the present invention, the second configuration information may be further sent to the second terminal by the network side device, so that the second terminal determines the first sidelink resource used for sidelink transmission, which is not specifically limited in the embodiments of the present invention.

In some embodiments, the first sidelink resource is a first frequency band or a first frequency band combination, the step that second configuration information is sent to the second terminal includes: a first sidelink frequency band list used for sidelink transmission of the first terminal is sent to the second terminal; or, a first sidelink frequency band list and/or a first index supported by the first terminal is sent to the second terminal; where the first index indicates a first frequency band on a specific position in the first sidelink frequency band list; or, a first sidelink frequency band combination list used for sidelink transmission of the first terminal is sent to the second terminal; or, a first sidelink frequency band combination list and/or a second index supported by the first terminal is sent to the second terminal; where the second index indicates a first frequency band combination on a specific position in the first sidelink frequency band list.

In this embodiment of the present invention, the first terminal sends the second configuration information to the second terminal, the second configuration information is used for indicating the first sidelink frequency band list used for sidelink transmission of the first terminal, the first sidelink frequency band list includes at least one sidelink frequency band, and the first sidelink resource is determined as the sidelink frequency band in the first sidelink frequency band list.

In this embodiment of the present invention, the first terminal sends the second configuration information to the second terminal, and sends the first sidelink frequency band list and/or the first index supported by the first terminal to the second terminal; where the first index indicates one or more first frequency bands in the first sidelink frequency band list, and the first sidelink resource is determined as the first frequency band according to the first index indicating the first frequency band on the specific position in the first sidelink frequency band list. It should be noted that the first sidelink frequency band list and the first index supported by the first terminal may be sent to the second terminal respectively or together; and in some possible implementations, the first sidelink frequency band list supported by the first terminal may be agreed in a communication protocol, and thus, the first terminal only sends the first index.

In this embodiment of the present invention, the first terminal sends the second configuration information to the second terminal, the second configuration information is used for indicating the first sidelink frequency band combination list used for sidelink transmission of the first terminal, the first sidelink frequency band combination list includes at least one sidelink frequency band combination, and the first sidelink resource is determined as the sidelink frequency band combination in the first sidelink frequency band combination list.

In this embodiment of the present invention, the first terminal sends the second configuration information to the second terminal so as to indicate the first sidelink frequency band combination list and/or the second index supported by the first terminal; where the second index indicates one or more first frequency band combinations in the first sidelink frequency band list, and the first sidelink resource is determined as the first frequency band combination according to the second index indicating the first frequency band combination on the specific position in the first sidelink frequency band combination list. It should be noted that the first sidelink frequency band combination list and the second index supported by the first terminal may be sent to the second terminal respectively or together; and in some possible implementations, the first sidelink frequency band combination list supported by the first terminal may be agreed in a communication protocol, and thus, the first terminal only sends the second index.

S42: the first sidelink resource among the plurality of candidate sidelink resources is determined as the target sidelink resource according to the second configuration indication information.

For facilitating understanding, the embodiments of the present invention provide an exemplary embodiment.

In this embodiment of the present invention, the first terminal supports the execution of sidelink transmission with the second terminal on the plurality of candidate sidelink resources, for example, the plurality of candidate sidelink resources include a candidate sidelink resource 1 and a candidate sidelink resource 2, the first terminal sends the second configuration information to the second terminal, the second configuration information indicates the first sidelink resource used for sidelink transmission of the first terminal as the candidate sidelink resource 1, after receiving the second configuration information, the second terminal accepts the configuration of the second configuration information, determines the first sidelink resource, i.e., the candidate sidelink resource 1, used for sidelink transmission with the first terminal, and then sends the second configuration indication information to the first terminal to indicate the first sidelink resource used for sidelink transmission of the second terminal as the candidate sidelink resource 1, and after receiving the second configuration indication information sent by the second terminal, the first terminal may determine the first sidelink resource, i.e., the candidate sidelink resource 1, among the plurality of candidate sidelink resources as the target sidelink resource.

Alternatively, the first terminal sends the second configuration information to the second terminal, the second configuration information indicates the first sidelink resource used for sidelink transmission of the first terminal as the candidate sidelink resource 1, after receiving the second configuration information, the second terminal refuses to accept the configuration of the second configuration information, and thus, the second terminal may send a refusal indication to the first terminal.

In this embodiment of the present invention, the plurality of candidate sidelink resources may further include a candidate sidelink resource 1, a candidate sidelink resource 2, a candidate sidelink resource 3 and a candidate sidelink resource 4, the first sidelink resource is the candidate sidelink resource 2, etc. The above-mentioned examples are only schematic, and are not used as specific limitations on the embodiments of the present invention.

In this embodiment of the present invention, the first terminal may determine the first sidelink resource as the target sidelink resource according to the second configuration indication information sent by the second terminal, and the second configuration indication information is used for indicating the first sidelink resource used for sidelink transmission of the second terminal. When executing a sidelink service, both of the first terminal and the second terminal perform sidelink transmission on the determined first sidelink resource, so that the execution of the sidelink service can be ensured, data loss is avoided, energy consumption can be reduced, and resource waste can be avoided. Steps S41 to S41 in the present invention can be performed alone or together with other embodiments of the present invention, which is no longer repeated herein.

Refer to FIG. 5 which is a flow chart of another sidelink communication method provided in an embodiment of the present invention.

As shown in FIG. 5, an embodiment of the present invention provides another sidelink communication method, the method is performed by a first terminal, and the method may include, but is not limited to the following steps.

S51: second configuration indication information sent by the second terminal is received; where the second configuration indication information is used for indicating a first sidelink resource used for sidelink transmission of the second terminal; and the first sidelink resource is determined by the second terminal according to the second configuration information and third configuration information.

Similar to the above-mentioned embodiment, the first terminal may send the second configuration information and the third configuration information to the second terminal in a unicast, multicast or broadcast way.

In this embodiment of the present invention, the first terminal supports the execution of sidelink transmission with the second terminal on the plurality of candidate sidelink resources, and the first terminal receives the second configuration indication information sent by the second terminal. The second configuration indication information indicates the first sidelink resource used for sidelink transmission of the second terminal, and therefore, the first terminal may determine the target sidelink resource among the plurality of candidate sidelink resources as the first sidelink resource according to the second configuration indication information.

In this embodiment of the present invention, the first sidelink resource is determined by the second terminal according to the second configuration information and the third configuration information. In a possible implementation, the second configuration information and the third configuration information are sent to the second terminal by the first terminal. It should be noted that the second configuration information and the third configuration information may be sent to the second terminal respectively or together.

The first terminal sends the second configuration information to the second terminal, the second configuration information indicates the first sidelink resource used for sidelink transmission of the first terminal, the first terminal sends the third configuration information to the second terminal, and the third configuration information is used for indicating a second sidelink resource suggested to be used for sidelink transmission of the second terminal.

Both of the first sidelink resource and the second sidelink resource may be from the plurality of candidate sidelink resources supported by the first terminal and used for sidelink transmission with the second terminal. Or, the first sidelink resource is from the plurality of candidate sidelink resources supported by the first terminal and used for sidelink transmission with the second terminal, and the second sidelink resource may be from other resources.

It can be understood that the first terminal may hope that the second terminal only performs sidelink transmission on some resources due to various reasons (such as power saving or interference reduction), at the moment, the first terminal may indicate, according to the third configuration information, the second sidelink resource suggested to be used for sidelink transmission of the second terminal, and sends the third configuration information to the second terminal.

It can be understood that the first terminal sends the second configuration information to the second terminal, and the second configuration information indicates the first sidelink resource used for sidelink transmission of the first terminal. Thus, in the case that the second terminal receives the second configuration information sent by the first terminal, it can be determined that the first sidelink resource can be used during sidelink transmission with the first terminal. However, the second terminal further receives the third configuration information sent by the first terminal, and the third configuration information indicates the second sidelink resource suggested to be used for sidelink transmission of the second terminal. At the moment, the second terminal needs to judge the second sidelink resource and the first sidelink resource so as to determine whether to perform sidelink transmission with the first terminal on the first sidelink resource.

It can be understood that the first sidelink resource and the second sidelink resource may be the same resource or different resources.

In the case that the first sidelink resource and the second sidelink resource are the same resource, the second terminal may accept configurations of the second configuration information and the third configuration information, determine the first sidelink resource (i.e., a third sidelink resource) used for sidelink transmission with the first terminal, and then sends the second configuration indication information indicating the first sidelink resource used for sidelink transmission of the second terminal to the first terminal. Or, the second terminal may further refuse to accept the configurations of the second configuration information and the third configuration information, and the second terminal may send a refusal indication to the first terminal.

In the case that the first sidelink resource and the second sidelink resource are the different resources, in this embodiment of the present invention, after receiving the second configuration information and the third configuration information, the second terminal may determine, according to the second configuration information and the third configuration information, a resource used for sidelink transmission with the first terminal.

It can be understood that, when the first terminal receives the second configuration information and the third configuration information that are sent by the second terminal, two pieces of information may be known, with one (the first sidelink resource used for sidelink transmission of the first terminal) and the other one (the second sidelink resource suggested to be used for sidelink transmission of the second terminal). The first sidelink resource and the second sidelink resource are the different resources, the second sidelink resource may include the first sidelink resource, or does not include the first sidelink resource.

In the case that the first sidelink resource and the second sidelink resource are the different resources and the second sidelink resource includes the first sidelink resource, the second terminal may accept the configurations indicated by the second configuration information and the third configuration information. Thus, it can be determined that sidelink transmission is performed by adopting the first sidelink resource used for sidelink transmission of the first terminal, and the second configuration indication information indicating the first sidelink resource used for sidelink transmission of the second terminal is sent to the first terminal.

In the case that the first sidelink resource and the second sidelink resource are the different resources and the second sidelink resource does not include the first sidelink resource, the second terminal may refuse to accept the configuration of the second configuration information, and may further send a refusal indication to the first terminal.

Based on this, after determining the first sidelink resource used for sidelink transmission, the second terminal may send the second configuration indication information to the first terminal to inform the sidelink resource used for sidelink transmission of the second terminal.

The first sidelink resource may refer to related description in S41 in the embodiments of the present invention so as to be no longer repeated herein.

In some embodiments, the second sidelink resource is a second frequency band or a second frequency band combination, the step that third configuration information is sent to the second terminal includes: a second sidelink frequency band list used for sidelink transmission of the first terminal is sent to the second terminal; or, a second sidelink frequency band list and/or a third index suggested to be used for sidelink transmission of the second terminal is sent to the second terminal; where the third index indicates a second frequency band on a specific position in the second sidelink frequency band list; or, a second sidelink frequency band combination list used for sidelink transmission of the first terminal is sent to the second terminal; or, a second sidelink frequency band combination list and/or a fourth index suggested to be used for sidelink transmission of the second terminal is sent to the second terminal; where the fourth index indicates a second frequency band combination on a specific position in the second sidelink frequency band list.

In this embodiment of the present invention, the first terminal sends the second configuration information to the second terminal, and sends the second sidelink frequency band list used for sidelink transmission of the first terminal to the second terminal, the second sidelink frequency band list includes at least one sidelink frequency band, and the first sidelink resource is determined as the sidelink frequency band in the first sidelink frequency band list.

In this embodiment of the present invention, the first terminal sends the second configuration information to the second terminal, and sends the second sidelink frequency band list and/or the third index supported by the first terminal to the second terminal; where the third index indicates the second frequency band on the specific position in the second sidelink frequency band list, and the first sidelink resource is determined as the second frequency band according to the third index indicating the second frequency band on the specific position in the second sidelink frequency band list. It should be noted that the second sidelink frequency band list and the third index supported by the first terminal may be sent to the second terminal respectively or together; and in some possible implementations, the second sidelink frequency band list supported by the first terminal may be agreed in a communication protocol, and thus, the first terminal only sends the third index.

In this embodiment of the present invention, the first terminal sends the second configuration information to the second terminal, and sends the second sidelink frequency band combination list used for sidelink transmission of the first terminal to the second terminal, the second sidelink frequency band combination list includes at least one sidelink frequency band combination, and the first sidelink resource is determined as the sidelink frequency band combination in the second sidelink frequency band combination list.

In this embodiment of the present invention, the first terminal sends the second configuration information to the second terminal, and sends the second sidelink frequency band combination list and/or the fourth index supported by the first terminal to the second terminal; where the fourth index indicates the second frequency band combination on the specific position in the second sidelink frequency band list, and the first sidelink resource is determined as the second frequency band combination according to the first frequency band combination on the specific position in the second sidelink frequency band combination list. It should be noted that the second sidelink frequency band combination list and the fourth index supported by the first terminal may be sent to the second terminal respectively or together; and in some possible implementations, the second sidelink frequency band combination list supported by the first terminal may be agreed in a communication protocol, and thus, the first terminal only sends the fourth index.

S52: the target sidelink resource among the plurality of candidate sidelink resources is determined as the first sidelink resource according to the second configuration indication information.

For facilitating understanding, the embodiments of the present invention provide an exemplary embodiment.

In this embodiment of the present invention, the first terminal supports the execution of sidelink transmission with the second terminal on the plurality of candidate sidelink resources, for example, the plurality of candidate sidelink resources include a candidate sidelink resource 1 and a candidate sidelink resource 2, the first terminal sends the second configuration information to the second terminal, the second configuration information indicates the first sidelink resource used for sidelink transmission of the first terminal as the candidate sidelink resource 1, the first terminal sends the third configuration information to the second terminal, the third configuration information indicates the second sidelink resource suggested to be used for sidelink transmission of the second terminal as the candidate sidelink resource 1, the second terminal accepts the configuration of the second configuration information according to the third configuration information, determines the first sidelink resource, i.e., the candidate sidelink resource 1, used for sidelink transmission with the first terminal, and then sends the second configuration indication information to the first terminal to indicate the first sidelink resource used for sidelink transmission of the second terminal as the candidate sidelink resource 1, and after receiving the second configuration indication information sent by the second terminal, the first terminal may determine the first sidelink resource, i.e., the candidate sidelink resource 1, among the plurality of candidate sidelink resources as the target sidelink resource.

Alternatively, the first terminal sends the second configuration information to the second terminal, the second configuration information indicates the first sidelink resource used for sidelink transmission of the first terminal as the candidate sidelink resource 1, the first terminal sends the third configuration information to the second terminal, the third configuration information indicates the second sidelink resource suggested to be used for sidelink transmission of the second terminal as the candidate sidelink resource 2, the second terminal refuses to accept the configuration of the second configuration information, and thus, the second terminal may send a refusal indication to the first terminal.

In this embodiment of the present invention, the plurality of candidate sidelink resources may further include a candidate sidelink resource 3 and a candidate sidelink resource 4 other than the candidate sidelink resource 1 and the candidate sidelink resource 2, the first sidelink resource is the candidate sidelink resource 2, etc. The above-mentioned examples are only schematic, and are not used as specific limitations on the embodiment of the present invention.

In this embodiment of the present invention, after receiving the second configuration indication information sent by the second terminal, the first terminal may determine the first sidelink resource used for sidelink transmission of the second terminal as the target sidelink resource, and the second configuration indication information is used for indicating the first sidelink resource used for sidelink transmission of the second terminal. Thus, when executing the to-be-executed sidelink service, both of the first terminal and the second terminal may send and receive information by using the same first sidelink resource, so that the execution of the sidelink service can be ensured, data loss is avoided, energy consumption can be reduced, and resource waste can be avoided.

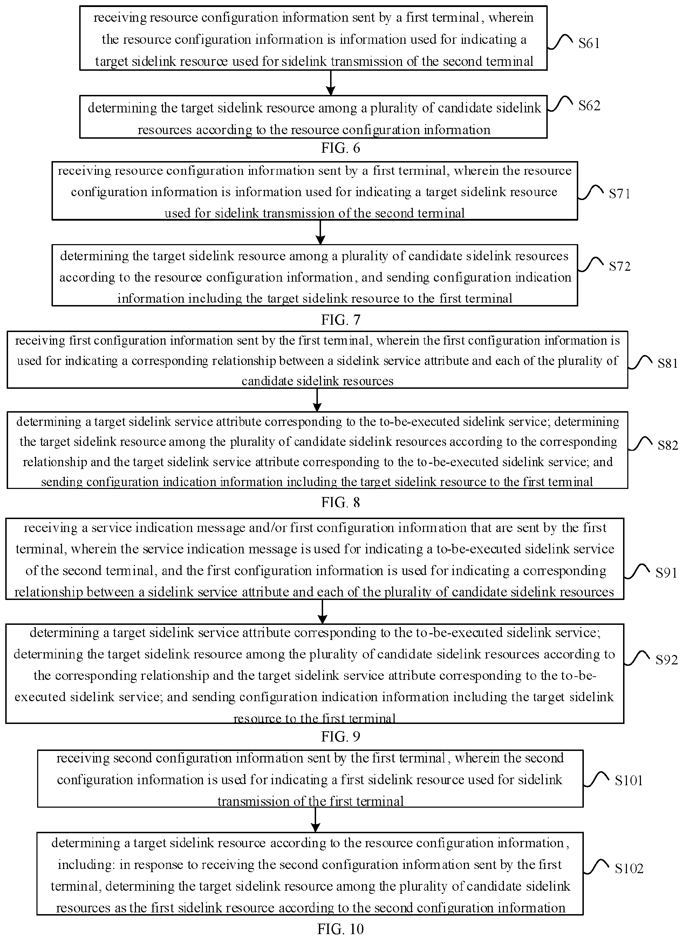

Refer to FIG. 6 which is a flow chart of another sidelink communication method provided in an embodiment of the present invention.

As shown in FIG. 6, an embodiment of the present invention provides another sidelink communication method, the method is performed by a second terminal, and the method may include, but is not limited to the following steps:
S61: resource configuration information sent by a first terminal is received; where the resource configuration information is information used for indicating a target sidelink resource used for sidelink transmission of the second terminal.

The first terminal may send the resource indication information to the second terminal through a PCS (interface)-RRC message.

The resource configuration information sent by the first terminal is the information used for indicating the target sidelink resource used for sidelink transmission of the second terminal, the first terminal may select one sidelink resource capable of performing sidelink transmission with the second terminal as the target sidelink resource used for sidelink transmission of the second terminal, and send the resource configuration information to the second terminal. In this embodiment of the present invention, the first terminal may determine the target sidelink resource according to a configuration of a network side device.

In this embodiment of the present invention, the resource configuration information is used for indicating the target sidelink resource used for sidelink transmission of the second terminal, and may be used for indicating the target sidelink resource used for sidelink transmission when the second terminal performs a sidelink service with one or more sidelink service attributes.

S62: the target sidelink resource among a plurality of candidate sidelink resources is determined according to the resource configuration information.

In this embodiment of the present invention, the second terminal supports the execution of sidelink transmission with the first terminal on the plurality of candidate sidelink resources.

In this embodiment of the present invention, the first terminal may randomly select one or more resources from resources supported by the first terminal and used for sidelink transmission with the second terminal as the target sidelink resource, and send the target sidelink resource to the second terminal so as to indicate that the target sidelink resource is also used when the second terminal performs sidelink transmission. Thus, the first terminal and the second terminal may perform sidelink transmission on the same target sidelink resource; on one hand, the execution of the different sidelink services can be ensured, and data loss is avoided; and on the other hand, the first terminal or the second terminal may receive, on the target sidelink resource, the information sent by the second terminal or the first terminal, electric energy can be saved, and resource waste can be avoided.

Alternatively, the first terminal may further determine, according to other information, the target sidelink resource used for sidelink transmission performed with the second terminal, for example, the first terminal receives related information sent by the network side device, and the target sidelink resource used for sidelink transmission of the first terminal and the second terminal are specified in the related information, the target sidelink resource may be selected from one or more of the plurality of candidate sidelink resources supported by the first terminal and used for sidelink transmission with the second terminal, the second terminal may report the plurality of candidate sidelink resources supported by the second terminal and used for sidelink transmission with the second terminal to the network side device, and after receiving the related information sent by the network side device, the first terminal may determine the target sidelink resource used for sidelink transmission with the second terminal, and send the resource configuration information including the information to the second terminal. Thus, the first terminal and the second terminal may perform sidelink transmission on the same target sidelink resource; on one hand, the execution of the different sidelink services can be ensured, and data loss is avoided; and on the other hand, the first terminal or the second terminal may receive, on the target sidelink resource, the information sent by the second terminal or the first terminal, electric energy can be saved, and resource waste can be avoided.

In this embodiment of the present invention, the first terminal may further send the resource configuration information including the plurality of candidate sidelink resources supported by the first terminal and used for sidelink transmission with the second terminal to the second terminal, and after receiving the resource configuration information sent by the first terminal, the second terminal randomly selects one or more of the candidate sidelink resources as the target sidelink resource so as to determine the target sidelink resource and further feed the determined target sidelink resource back to the first terminal. Thus, the first terminal and the second terminal may perform sidelink transmission on the same target sidelink resource; on one hand, the execution of the different sidelink services can be ensured, and data loss is avoided; and on the other hand, the first terminal or the second terminal may receive, on the target sidelink resource, the information sent by the second terminal or the first terminal, electric energy can be saved, and resource waste can be avoided.

Alternatively, the first terminal may further send the resource configuration information including the plurality of candidate sidelink resources supported by the first terminal and used for sidelink transmission with the second terminal and other related information to the second terminal, and after receiving the resource configuration information sent by the first terminal, the second terminal may determine the target sidelink resource according to the plurality of candidate sidelink resources supported by the first terminal and used for sidelink transmission with the second terminal and other related information. For example, the resource configuration information sent by the first terminal includes the plurality of candidate sidelink resources supported by the first terminal and used for sidelink transmission with the second terminal and a plurality of second candidate sidelink resources suggested to be used for the second terminal and the first terminal to perform sidelink transmission; and after receiving the resource configuration information sent by the first terminal, the second terminal may determine the target sidelink resource according to a first candidate sidelink resource and a second candidate sidelink resource, and further feed the determined target sidelink resource back to the first terminal. Thus, the first terminal and the second terminal may perform sidelink transmission on the same target sidelink resource; on one hand, the execution of the different sidelink services can be ensured, and data loss is avoided; and on the other hand, the first terminal or the second terminal may receive, on the target sidelink resource, the information sent by the second terminal or the first terminal, electric energy can be saved, and resource waste can be avoided.

In this embodiment of the present invention, the target sidelink resource may be selected from one or more of the plurality of candidate sidelink resources. It can be understood that, in the case that the target sidelink resource is selected from one of the plurality of candidate sidelink resources, the first terminal and the second terminal may perform sidelink transmission on the determined candidate sidelink resource, so that the execution of the different sidelink services can be ensured, electric energy can be saved, and resource waste can be avoided. In the case that the target sidelink resource is selected from more of the plurality of candidate sidelink resources, sidelink transmission is performed on the plurality of candidate sidelink resources, and if transmission fails on one candidate sidelink resource, and transmission may be performed on other candidate sidelink resources, so that the execution of the sidelink services can be ensured, and data loss is avoided.

In the embodiments of the present invention, the first terminal may send the determined target sidelink resource used for sidelink transmission to the second terminal, the second terminal receives the resource configuration information sent by the first terminal, and in the case that the resource configuration information is the information used for indicating the target sidelink resource used for sidelink transmission of the second terminal, the second terminal may determine the target sidelink resource among the plurality of candidate sidelink resources according to the second configuration information. Thus, when executing a sidelink service, the first terminal and the second terminal may perform sidelink transmission on the determined target sidelink resource, so that the execution of the sidelink service can be ensured, data loss is avoided, energy consumption can be reduced, and resource waste can be avoided. The transmission in the embodiments of the present invention may include sending and/or receiving.

Refer to FIG. 7 which is a flow chart of another sidelink communication method provided in an embodiment of the present invention.

As shown in FIG. 7, an embodiment of the present invention provides another sidelink communication method, the method is performed by a second terminal, and the method may include, but is not limited to the following steps.

S71: resource configuration information sent by a first terminal is received; where the resource configuration information is information used for indicating a target sidelink resource used for sidelink transmission of the second terminal.

The first terminal may send the resource indication information to the second terminal through a PCS (interface)-RRC message.

The resource configuration information sent by the first terminal is the information used for indicating the target sidelink resource used for sidelink transmission of the second terminal, the first terminal may select one sidelink resource capable of performing sidelink transmission with the second terminal as the target sidelink resource used for sidelink transmission of the second terminal, and send the resource configuration information to the second terminal. In this embodiment of the present invention, the first terminal may determine the target sidelink resource according to a configuration of a network side device.

Alternatively, the first terminal may send at least one sidelink resource used for sidelink transmission with the second terminal, that may be performed by the first terminal, to the second terminal, and the second terminal may determine the target sidelink resource among the at least one sidelink resource sent by the first terminal.

S72: the target sidelink resource among a plurality of candidate sidelink resources is determined according to the resource configuration information, and configuration indication information including the target sidelink resource is sent to the first terminal.

The candidate sidelink resources are sidelink resources supported by the second terminal and used for sidelink transmission with the first terminal.

In this embodiment of the present invention, the second terminal receives the resource configuration information sent by the first terminal, determines the target sidelink resource among the at least one sidelink resource sent by the first terminal, and sends the configuration indication information of the target sidelink resource to the first terminal.

In the embodiments of the present invention, the first terminal may send the determined target sidelink resource used for sidelink transmission to the second terminal, the second terminal receives the resource configuration information sent by the first terminal, and in the case that the resource configuration information indicates the target sidelink resource used for sidelink transmission of the second terminal, the second terminal may determine the target sidelink resource according to the resource configuration information, and further send the configuration indication information including the target sidelink resource to the first terminal, and the first terminal may determine the target sidelink resource the same as that of the second terminal. Thus, when executing a sidelink service, the first terminal and the second terminal may perform sidelink transmission on the determined target sidelink resource, so that the execution of the sidelink service can be ensured, data loss is avoided, energy consumption can be reduced, and resource waste can be avoided. The transmission in the embodiments of the present invention may include sending and/or receiving.

Refer to FIG. 8 which is a flow chart of another sidelink communication method provided in an embodiment of the present invention.

As shown in FIG. 8, an embodiment of the present invention provides another sidelink communication method, the method is performed by a second terminal, and the method may include, but is not limited to the following steps.

S81: first configuration information sent by the first terminal is received; where the first configuration information is used for indicating a corresponding relationship between a sidelink service attribute and each of the plurality of candidate sidelink resources.

The sidelink service attribute may refer to related description in S31 in the embodiments of the present invention so as to be no longer repeated herein.

A connection between the first terminal and the second terminal may be a unicast connection, that is, after the unicast connection is established between the first terminal and the second terminal, the first configuration information is sent in a unicast way. The first terminal may further send the first configuration information in a multicast or broadcast way, which is not limited in the embodiments of the present invention. The above-mentioned description is the same as that in the following embodiments so as to be no longer repeated.

The first configuration indication information at least includes two pieces of information indicating the corresponding relationship between the sidelink service attribute and each of the sidelink resources, so that the first terminal determines the used sidelink resource according to the sidelink service attribute.

S82: a target sidelink service attribute corresponding to the to-be-executed sidelink service is determined; the target sidelink resource among the plurality of candidate sidelink resources is determined according to the corresponding relationship and the target sidelink service attribute corresponding to the to-be-executed sidelink service; and configuration indication information including the target sidelink resource is sent to the first terminal.

The candidate sidelink resources are sidelink resources supported by the second terminal and used for sidelink transmission with the first terminal.

In this embodiment of the present invention, the second terminal may determine the target sidelink service attribute corresponding to the to-be-executed sidelink service. For example, in the case that the target sidelink service attribute corresponding to the to-be-executed sidelink service is a destination address, the second terminal may determine the target sidelink service attribute corresponding to the to-be-executed sidelink service.

In the embodiments of the present invention, the corresponding relationship between the sidelink service attribute and each of the sidelink resources may be determined by the first terminal on the basis of a communication protocol or determined by the first terminal on the basis of a configuration of a network side, which is not limited herein.

It can be understood that, in the case that the second terminal determines the target sidelink service attribute corresponding to the to-be-executed sidelink service and the corresponding relationship between the sidelink service attribute and each of the sidelink resources, the target sidelink resource among the sidelink resources may be determined, and the configuration indication information including the target sidelink resource is further sent to the first terminal. Thus, when executing a sidelink service, both of the first terminal and the second terminal perform sidelink transmission on the determined target sidelink resource, so that the execution of the sidelink service can be ensured, data loss is avoided, energy consumption can be reduced, and resource waste can be avoided.

In some embodiments, the sidelink communication method provided in the embodiments of the present invention further includes: a first resource indication message is sent to a network side device; where the first resource indication message is used for indicating the corresponding relationship between the sidelink service attribute and each of the sidelink resources.

In this embodiment of the present invention, in the case that the corresponding relationship between the sidelink service attribute and each of the sidelink resources is determined, the second terminal sends the first resource indication message to the network side device, and reports the corresponding relationship between the sidelink service attribute and each of the sidelink resources, so that the network side device may further determine to send a resource to the second terminal according to the corresponding relationship between the sidelink service attribute and each of the sidelink resources.

Refer to FIG. 9 which is a flow chart of another sidelink communication method provided in an embodiment of the present invention.

As shown in FIG. 9, an embodiment of the present invention provides another sidelink communication method, the method is performed by a second terminal, and the method may include, but is not limited to the following steps.

S91: a service indication message and/or first configuration information that are sent by the first terminal is received; where the service indication message is used for indicating a to-be-executed sidelink service of the second terminal; and the first configuration information is used for indicating a corresponding relationship between a sidelink service attribute and each of the plurality of candidate sidelink resources.

It should be noted that the first configuration information sent by the first terminal may be used for indicating the corresponding relationship between the sidelink service attribute and each of the sidelink resources. In a possible implementation, if the second terminal may determine the corresponding relationship between the sidelink service attribute and each of the sidelink resources according to a communication protocol or a pre-configuration or a configuration of the network side device, the first terminal may only send the service indication message.

In this embodiment of the present invention, after receiving the service indication message from the first terminal, the second terminal may determine the to-be-executed sidelink service and further determine the sidelink service attribute corresponding to the to-be-executed sidelink service. Moreover, after receiving the first configuration information from the first terminal, the second terminal may determine the corresponding relationship between the sidelink service attribute and each of the sidelink resources.

S92: a target sidelink service attribute corresponding to the to-be-executed sidelink service is determined; the target sidelink resource among the plurality of candidate sidelink resources is determined according to the corresponding relationship and the target sidelink service attribute corresponding to the to-be-executed sidelink service; and configuration indication information including the target sidelink resource is sent to the first terminal.

The candidate sidelink resources are sidelink resources supported by the second terminal and used for sidelink transmission with the first terminal.

It should be noted that related description for S91 and S92 in the embodiments of the present invention may refer to the related description for S81 and S82, and the same description will be no longer repeated herein.

Refer to FIG. 10 which is a flow chart of another sidelink communication method provided in an embodiment of the present invention.

As shown in FIG. 10, an embodiment of the present invention provides another sidelink communication method, the method is performed by a second terminal, and the method may include, but is not limited to the following steps.

S101: second configuration information sent by the first terminal is received; where the second configuration information is used for indicating a first sidelink resource used for sidelink transmission of the first terminal.

The first sidelink resource may refer to related description in S41 in the embodiments of the present invention so as to be no longer repeated herein.

In this embodiment of the present invention, the second terminal receives the second configuration information sent by the first terminal, and the second configuration information is used for indicating the first sidelink resource used for sidelink transmission of the first terminal.

A connection between the first terminal and the second terminal may be a unicast connection, that is, after the unicast connection is established between the first terminal and the second terminal, the first configuration information is sent in a unicast way. The first terminal may further send the first configuration information in a multicast or broadcast way, which is not limited in the embodiments of the present invention.

S102: a target sidelink resource is determined according to the resource configuration information, which includes: in response to receiving the second configuration information sent by the first terminal, the target sidelink resource among the plurality of candidate sidelink resources is determined as the first sidelink resource according to the second configuration information.

In this embodiment of the present invention, the second terminal supports the execution of sidelink transmission with the first terminal on the plurality of candidate sidelink resources.

In a possible implementation, the method may further include: configuration indication information including the target sidelink resource is sent to the first terminal.

The second configuration information may refer to the description in other embodiments so as to be no longer repeated herein.

In this embodiment of the present invention, the second terminal receives the second configuration information sent by the first terminal, and in the case that the second configuration information indicates the first sidelink resource used for sidelink transmission of the first terminal, the second terminal may determine the target sidelink resource as the first sidelink resource according to the second configuration information; and further, the configuration indication information including the target sidelink resource is sent to the first terminal. Thus, when executing a sidelink service, both of the first terminal and the second terminal perform sidelink transmission on the determined target sidelink resource, so that the execution of the sidelink service can be ensured, data loss is avoided, energy consumption can be reduced, and resource waste can be avoided.

In some embodiments, the sidelink communication method provided in the embodiments of the present invention further includes: configuration indication information including the target sidelink resource is sent to the first terminal, which includes: second configuration indication information is sent to the first terminal; where the second configuration indication information is used for indicating a first sidelink resource used for sidelink transmission of the second terminal.

In the embodiments of the present invention, the second terminal receives the second configuration information sent by the first terminal, and in the case that the second configuration information indicates the first sidelink resource used for sidelink transmission of the first terminal, the second terminal may determine the target sidelink resource as the first sidelink resource according to the second configuration information; and further, the configuration indication information including the target sidelink resource is sent to the first terminal, the second configuration indication information is sent to the first terminal, and the second configuration indication information is used for indicating the first sidelink resource used for sidelink transmission of the second terminal. Thus, when executing a sidelink service, both of the first terminal and the second terminal perform sidelink transmission on the determined target sidelink resource, so that the execution of the sidelink service can be ensured, data loss is avoided, energy consumption can be reduced, and resource waste can be avoided.

In some embodiments, the sidelink communication method provided in the embodiments of the present invention further includes: a third resource indication message is sent to the network side device; where the third resource indication message is used for indicating the target sidelink resource used for sidelink transmission of the second terminal as the first sidelink resource.

In this embodiment of the present invention, in the case that the target sidelink resource is determined as the first sidelink resource, the second terminal sends the third resource indication message to the network side device, and reports the target sidelink resource as the first sidelink resource, so that the network side device may further determine to send a resource to the second terminal according to the target sidelink resource being the first sidelink resource.

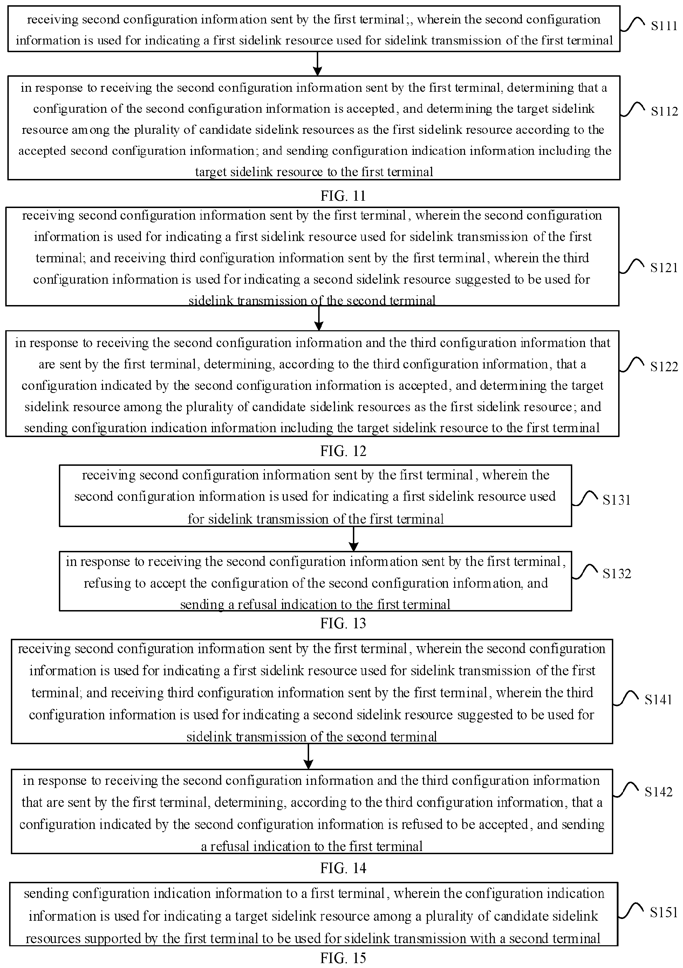

Refer to FIG. 11 which is a flow chart of another sidelink communication method provided in an embodiment of the present invention.

As shown in FIG. 11, an embodiment of the present invention provides another sidelink communication method, the method is performed by a second terminal, and the method may include, but is not limited to the following steps.

S111: second configuration information sent by the first terminal is received; where the second configuration information is used for indicating a first sidelink resource used for sidelink transmission of the first terminal.

The first sidelink resource may refer to related description in S41 in the embodiments of the present invention so as to be no longer repeated herein. The second configuration information may be sent in a way of unicast, multicast or broadcast.

S112: in response to receiving the second configuration information sent by the first terminal, it is determined that a configuration of the second configuration information is accepted, and the target sidelink resource among the plurality of candidate sidelink resources is determined as the first sidelink resource according to the accepted second configuration information; and configuration indication information including the target sidelink resource is sent to the first terminal.

In this embodiment of the present invention, the second terminal supports the execution of sidelink transmission with the first terminal on the plurality of candidate sidelink resources.

In this embodiment of the present invention, the second terminal receives the second configuration information sent by the first terminal, and in the case that the second configuration information indicates the first sidelink resource used for sidelink transmission of the first terminal, the second terminal may accept or not accept the first sidelink resource indicated by the second configuration information and used for sidelink transmission of the first terminal; in the case that the second terminal may accept the first sidelink resource indicated by the second configuration information and used for sidelink transmission of the first terminal, the second terminal may determine the target sidelink resource as the first sidelink resource according to the second configuration information, and further send the configuration indication information including the target sidelink resource to the first terminal. Thus, when executing a sidelink service, both of the first terminal and the second terminal perform sidelink transmission on the determined target sidelink resource, so that the execution of the sidelink service can be ensured, data loss is avoided, energy consumption can be reduced, and resource waste can be avoided.

It should be noted that related description for S111 and S112 in the embodiments of the present invention may refer to the related description for S101 and 5102, and the same description will be no longer repeated herein.

Refer to FIG. 12 which is a flow chart of another sidelink communication method provided in an embodiment of the present invention.

As shown in FIG. 12, an embodiment of the present invention provides another sidelink communication method, the method is performed by a second terminal, and the method may include, but is not limited to the following steps.

S121: second configuration information sent by the first terminal is received; where the second configuration information is used for indicating a first sidelink resource used for sidelink transmission of the first terminal; and third configuration information sent by the first terminal is received; where the third configuration information is used for indicating a second sidelink resource suggested to be used for sidelink transmission of the second terminal.

The first sidelink resource may refer to related description in S41 in the embodiments of the present invention, and the second sidelink resource may refer to related description in S51 in the embodiments of the present invention so as to be no longer repeated herein. The first sidelink resource and the second sidelink resource may be determined respectively among two or more candidate sidelink resources. In the above-mentioned implementation, the first sidelink resource and the second sidelink resource may be the same resource or different resources. That is, the first sidelink resource used when the first terminal sends sidelink transmission to the second terminal may be the same as or different from the second sidelink resource used when the second terminal sends sidelink transmission to the first terminal. The second configuration information and/or the third configuration information may be sent in a unicast, multicast or broadcast way.

S122: in response to receiving the second configuration information and the third configuration information that are sent by the first terminal, it is determined, according to the third configuration information, that a configuration indicated by the second configuration information is accepted, and the target sidelink resource among the plurality of candidate sidelink resources is determined as the first sidelink resource; and configuration indication information including the target sidelink resource is sent to the first terminal.

In this embodiment of the present invention, the second terminal supports the execution of sidelink transmission with the first terminal on the plurality of candidate sidelink resources.

In this embodiment of the present invention, after receiving the second configuration information and the third configuration information that are sent by the first terminal, the second terminal may determine the first sidelink used for sidelink transmission of the first terminal and the second sidelink resource suggested to be used for sidelink transmission of the second terminal, and further, the second terminal may determine, according to the second sidelink resource, whether to accept the first sidelink resource, and determine, according to the second sidelink resource, whether to perform sidelink transmission by using the first sidelink resource the same as that of the first terminal.

In the case that it is determined, according to the third configuration information, that the configuration indicated by the second configuration information is accepted, the target sidelink resource is determined as the first sidelink resource; and the configuration indication information including the target sidelink resource is sent to the first terminal.

Thus, when executing a sidelink service, both of the first terminal and the second terminal perform sidelink transmission on the determined target sidelink resource, so that the execution of the sidelink service can be ensured, data loss is avoided, energy consumption can be reduced, and resource waste can be avoided.

In some embodiments, the sidelink communication method provided in the embodiments of the present invention further includes: a second resource indication message is sent to the network side device; where the second resource indication message is used for indicating a second sidelink resource suggested to be used for sidelink transmission of the second terminal.

In this embodiment of the present invention, in the case that it is determined that the second sidelink resource is used, the second terminal reports the second sidelink resource used for sidelink transmission of the second terminal to the network side device, so that the network side device may further determine to send a resource to the second terminal according to the second sidelink resource used for sidelink transmission of the second terminal. In this embodiment, the second terminal needs to report the used sidelink resource to the network side device to avoid a conflict between the sidelink transmission of the second terminal and the transmission performed by the network side device.

It should be noted that related description for S121 and S 122 in the embodiments of the present invention may refer to the related description for S101 and S102, and the same description will be no longer repeated herein.

Refer to FIG. 13 which is a flow chart of another sidelink communication method provided in an embodiment of the present invention.

As shown in FIG. 13, an embodiment of the present invention provides another sidelink communication method, the method is performed by a second terminal, and the method may include, but is not limited to the following steps.

S131: second configuration information sent by the first terminal is received; where the second configuration information is used for indicating a first sidelink resource used for sidelink transmission of the first terminal.

The first sidelink resource may refer to related description in S41 in the embodiments of the present invention so as to be no longer repeated herein.

S132: in response to receiving the second configuration information sent by the first terminal, the configuration of the second configuration information is refused to be accepted, and a refusal indication is sent to the first terminal.

In this embodiment of the present invention, the second terminal supports the execution of sidelink transmission with the first terminal on the plurality of candidate sidelink resources.

In this embodiment of the present invention, the second terminal receives the second configuration information sent by the first terminal, and in the case that the second configuration information indicates the first sidelink resource used for sidelink transmission of the first terminal, the second terminal may accept or not accept the first sidelink resource indicated by the second configuration information and used for sidelink transmission of the first terminal; in the case that the second terminal may refuse to accept the first sidelink resource indicated by the second configuration information and used for sidelink transmission of the first terminal, the second terminal sends the refusal indication to the first terminal.

In some embodiments, the sidelink communication method provided in the embodiments of the present invention further includes: a refusal indication is sent to the first terminal, which includes: the refusal indication is sent to the first terminal on a third sidelink resource used for establishing a unicast connection with the first terminal. The connection established between the second terminal and the first terminal may be a unicast, multicast or broadcast connection.

In some embodiments, the sidelink communication method provided in the embodiments of the present invention further includes: a refusal indication is sent to the first terminal, which includes: the refusal indication is sent to the first terminal on a fourth sidelink resource; where the fourth sidelink resource is configured by the network side device or specified in a communication protocol.

In some embodiments, the sidelink communication method provided in the embodiments of the present invention further includes: information sent by the network side device and used for indicating the fourth sidelink resource is received.

It should be noted that, in the embodiments of the present invention, S131 and S132 may be performed alone or together in conjunction with any other step in the embodiments of the present invention, such as S91 and S92 and/or S101 and S102 and/or S111 and S 112 in the embodiments of the present invention, which is not limited in the embodiments of the present invention.

Refer to FIG. 14 which is a flow chart of another sidelink communication method provided in an embodiment of the present invention.

As shown in FIG. 14, an embodiment of the present invention provides another sidelink communication method, the method is performed by a second terminal, and the method may include, but is not limited to the following steps.

S141: second configuration information sent by the first terminal is received; where the second configuration information is used for indicating a first sidelink resource used for sidelink transmission of the first terminal; and third configuration information sent by the first terminal is received; where the third configuration information is used for indicating a second sidelink resource suggested to be used for sidelink transmission of the second terminal.

The first sidelink resource may refer to related description in S41 in the embodiments of the present invention, and the second sidelink resource may refer to related description in S51 in the embodiments of the present invention so as to be no longer repeated herein.

S142: in response to receiving the second configuration information and the third configuration information that are sent by the first terminal, it is determined, according to the third configuration information, that a configuration indicated by the second configuration information is refused to be accepted, and a refusal indication is sent to the first terminal.

In this embodiment of the present invention, the second terminal supports the execution of sidelink transmission with the first terminal on the plurality of candidate sidelink resources.

It should be noted that related description for S141 and S142 in the embodiments of the present invention may refer to the related description for S131 and S132, and the same description will be no longer repeated herein.

It should be noted that, in the embodiments of the present invention, S141 and S142 may be performed alone or together in conjunction with any other step in the embodiments of the present invention, such as S91 and S92 and/or S101 and S102 and/or S111 and S 112 in the embodiments of the present invention, which is not limited in the embodiments of the present invention.

Refer to FIG. 15 which is a flow chart of another sidelink communication method provided in an embodiment of the present invention.

As shown in FIG. 15, an embodiment of the present invention provides another sidelink communication method, the method is performed by a network side device, and the method may include, but is not limited to the following steps.

S151: configuration indication information is sent to a first terminal; where the configuration indication information is used for indicating a target sidelink resource among a plurality of candidate sidelink resources supported by the first terminal and used for sidelink transmission with a second terminal.

In this embodiment of the present invention, the first terminal supports the execution of sidelink transmission with the second terminal on the plurality of candidate sidelink resources, the second terminal supports the execution of sidelink transmission with the first terminal on the plurality of candidate sidelink resources, the network side device sends the configuration indication information to the first terminal to indicate the target sidelink resource among the plurality of candidate sidelink resources used for sidelink transmission of the first terminal and the second terminal, and thus, the first terminal may determine the target sidelink resource among the plurality of candidate sidelink resources.

The network side device may receive the information, sent by the second terminal, of the target sidelink resource supported by the second terminal and used for sidelink transmission with the first terminal, and then send the configuration indication information including the above-mentioned information to the first terminal so as to inform the first terminal to be capable of performing sidelink transmission with the second terminal on the target sidelink resource. Thus, the first terminal and the second terminal may perform sidelink transmission on the determined same target sidelink resource, so that the execution of the different sidelink services can be ensured, and data loss is avoided. In the embodiments of the present invention, the transmission may include sending and/or receiving.

After receiving the configuration indication information from the network side device, the first terminal may send the target sidelink resource to the second terminal, so that the second terminal determines the target sidelink resource used for sidelink transmission with the first terminal. Thus, the first terminal and the second terminal may perform sidelink transmission on the determined same target sidelink resource, so that the execution of the different sidelink services can be ensured, and data loss is avoided. In the embodiments of the present invention, the transmission may include sending and/or receiving.

The network side device may send the configuration indication information to the first terminal through a system message or an RRC (Radio Resource Control) reconfiguration message. In this embodiment of the present invention, the first terminal may receive the configuration indication information from the network side device, and determine, according to the configuration indication information, the target sidelink resource used for sidelink transmission, so that the target sidelink resource used when sidelink transmission is performed on different sidelink services may be determined. Thus, the execution of the different sidelink services can be ensured, and data loss is avoided.

In some embodiments, the sidelink communication method provided in the embodiments of the present invention further includes: a first resource indication message sent by the second terminal is received; where the first resource indication message is used for indicating the corresponding relationship between the sidelink service attribute and each of the sidelink resources, and the corresponding relationship between the sidelink service attribute and each of the sidelink resources is determined by the second terminal according to first configuration information sent by the first terminal. The step may be performed alone or together with step S151 or other steps.

In this embodiment of the present invention, in the case that the corresponding relationship between the sidelink service attribute and each of the sidelink resources is determined according to the first configuration information sent by the first terminal, the second terminal sends the first resource indication message to the network side device, and reports the corresponding relationship between the sidelink service attribute and each of the sidelink resources, so that the network side device may further determine to send a resource to the second terminal according to the corresponding relationship between the sidelink service attribute and each of the sidelink resources. In this embodiment, the first terminal and the second terminal may camp in different base stations, and therefore, the second terminal needs to report the used sidelink resource to the network side device to avoid a conflict between the sidelink transmission of the second terminal and the transmission performed by the network side device.

In some embodiments, the sidelink communication method provided in the embodiments of the present invention further includes: a second resource indication message sent by the second terminal is received; where the second resource indication message is used for indicating a second sidelink resource suggested to be used for sidelink transmission of the second terminal, and the second sidelink resource is determined by the second terminal according to second configuration information sent by the first terminal, which may specifically refer to other embodiments of the present invention.

In this embodiment of the present invention, in the case that the second sidelink resource suggested to be used for sidelink transmission of the second terminal is determined according to the second configuration information sent by the first terminal, the second terminal sends the second resource indication message to the network side device to report the second sidelink resource, so that the network side device may further determine to send a resource to the second terminal according to the second sidelink resource suggested to be used for sidelink transmission of the second terminal, which may specifically refer to other embodiments of the present invention.

In some embodiments, the sidelink communication method provided in the embodiments of the present invention further includes: a second resource indication message sent by the second terminal is received; where the second resource indication message is used for indicating the target sidelink resource used for sidelink transmission of the second terminal as a first sidelink resource, and the first sidelink resource is determined by the second terminal according to second configuration information and/or third configuration information sent by the first terminal, which may specifically refer to other embodiments of the present invention.

In this embodiment of the present invention, in the case that the target sidelink resource used for sidelink transmission of the second terminal is determined as the first sidelink resource according to the second configuration information and/or the third configuration information sent by the first terminal, the second terminal sends the second resource indication message to the network side device, and reports the target sidelink resource used for sidelink transmission of the second terminal as the first sidelink resource, so that the network side device may further determine to send a resource to the second terminal according to the report that the target sidelink resource used for sidelink transmission of the second terminal is the first sidelink resource, which may specifically refer to other embodiments of the present invention.

In some embodiments, the sidelink communication method provided in the embodiments of the present invention further includes: second configuration indication information is sent to the second terminal in unicast connection with the first terminal; where the second configuration indication information is used for indicating a fourth sidelink resource.

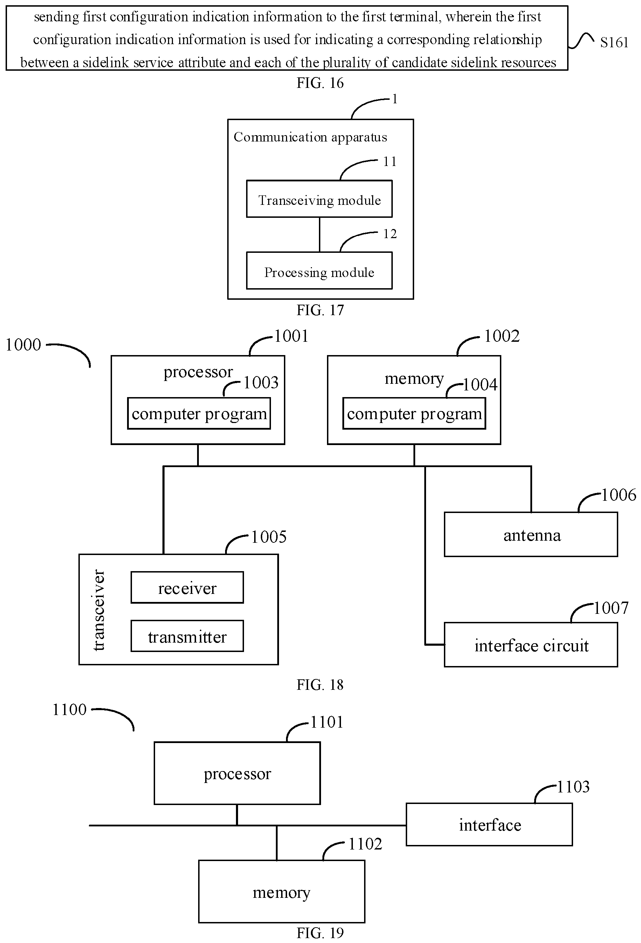

Refer to FIG. 16 which is a flow chart of another sidelink communication method provided in an embodiment of the present invention.

As shown in FIG. 16, an embodiment of the present invention provides another sidelink communication method, the method is performed by a network side device, and the method may include, but is not limited to the following steps.

S161: first configuration indication information is sent to the first terminal; where the first configuration indication information is used for indicating a corresponding relationship between a sidelink service attribute and each of the plurality of candidate sidelink resources.

The first configuration indication information at least includes two pieces of information indicating the corresponding relationship between the sidelink service attribute and each of the sidelink resources, so that the first terminal determines the used sidelink resource according to the sidelink service attribute.

In some embodiments, the sidelink service attribute includes at least one of: a quality of service (QoS); a sidelink destination address; a transmitting file Tx profile; a logic channel for sidelink data transmission; or a carrier for sidelink data transmission.

It should be noted that related description for S161 in the embodiments of the present invention may refer to the related description for S 151, and the same description will be no longer repeated herein.

In the above-mentioned embodiments provided in the present invention, the method provided in the embodiments of the present invention are respectively introduced from the perspectives of the first terminal, the second terminal, and the network side device. In order to achieve all the functions in the method provided in the above-mentioned embodiments of the present invention, the first terminal, the second terminal and the network side device may include a hardware structure and a software module, and achieve all of the above-mentioned functions in a form of the hardware structure, or the software module or the hardware structure and the software module. A certain function in the above-mentioned functions may be executed in a way of the hardware structure, or the software module or the hardware structure and the software module.

Refer to FIG. 17 which is a schematic structural diagram of a communication apparatus 1 provided in an embodiment of the present invention, the communication apparatus 1 shown in FIG. 17 may include a transceiving module 11 and a processing module 12. The transceiving module 11 may include a sending module and/or a receiving module, the sending module is configured to achieve a sending function, the receiving module is configured to achieve a receiving function, and the transceiving module 11 may achieve the sending function and/or the receiving function.

The communication apparatus 1 may be a first terminal or a second terminal or a network side device, or an apparatus in the terminals or the network side device, or an apparatus that may be matched with the terminal or the network side device.

The communication apparatus 1 is the first terminal. The communication apparatus 1 includes a transceiving module 11 configured to receive configuration indication information sent by a network side device or a second terminal; and a processing module 12 configured to determine, according to the configuration indication information, a target sidelink resource used for sidelink transmission among a plurality of candidate sidelink resources.

In some embodiments, the transceiving module 11 is specifically configured to receive first configuration indication information sent by the network side device; where the first configuration indication information is used for indicating a corresponding relationship between a sidelink service attribute and each of the plurality of candidate sidelink resources; and the processing module 12 is specifically configured to determine the target sidelink resource among the plurality of candidate sidelink resources according to the corresponding relationship and a target sidelink service attribute corresponding to a to-be-executed sidelink service.

In some embodiments, the sidelink service attribute includes at least one of: a quality of service (QoS); a sidelink destination address; a transmitting file Tx profile; a logic channel for sidelink data transmission; or a carrier for sidelink data transmission.

In some embodiments, the transceiving module 11 is further configured to send first configuration information to the second terminal; where the first configuration information is used for indicating the corresponding relationship between the sidelink service attribute and each of the plurality of candidate sidelink resources.

In some embodiments, the transceiving module 11 is further configured to send sidelink information corresponding to the to-be-executed sidelink service to the second terminal on the target sidelink resource; or, receive sidelink information sent by the second terminal and corresponding to the to-be-executed sidelink service on the target sidelink resource.

In some embodiments, the transceiving module 11 is further configured to send second configuration information to the second terminal; where the second configuration information is used for indicating a first sidelink resource used for sidelink transmission of the first terminal.

In some embodiments, the first sidelink resource is a first frequency band or a first frequency band combination, where the transceiving module 11 is further configured to: send a first sidelink frequency band list used for sidelink transmission of the first terminal to the second terminal; or, send a first sidelink frequency band list and/or a first index supported by the first terminal to the second terminal; where the first index indicates a first frequency band on a specific position in the first sidelink frequency band list; or, send a first sidelink frequency band combination list used for sidelink transmission of the first terminal to the second terminal; or, send a first sidelink frequency band combination list and/or a second index supported by the first terminal to the second terminal; where the second index indicates a first frequency band combination on a specific position in the first sidelink frequency band list.

In some embodiments, the transceiving module 11 is further configured to receive second configuration indication information sent by the second terminal; where the second configuration indication information is used for indicating a first sidelink resource used for sidelink transmission of the second terminal; and the first sidelink resource is determined by the second terminal according to the second configuration information; and the processing module 12 is further configured to determine the target sidelink resource among the plurality of candidate sidelink resources as the first sidelink resource according to the second configuration indication information.

In some embodiments, the transceiving module 11 is further configured to send third configuration information to the second terminal; where the third configuration information is used for indicating a second sidelink resource suggested to be used for sidelink transmission of the second terminal.

In some embodiments, the second sidelink resource is a second frequency band or a second frequency band combination, where the transceiving module 11 is further configured to: send a second sidelink frequency band list used for sidelink transmission of the first terminal to the second terminal; or, send a second sidelink frequency band list and/or a third index suggested to be used for sidelink transmission of the second terminal to the second terminal; where the third index indicates a second frequency band on a specific position in the second sidelink frequency band list; or, send a second sidelink frequency band combination list used for sidelink transmission of the first terminal to the second terminal; or, send a second sidelink frequency band combination list and/or a fourth index suggested to be used for sidelink transmission of the second terminal to the second terminal; where the fourth index indicates a second frequency band combination on a specific position in the second sidelink frequency band list.

In some embodiments, the transceiving module 11 is further configured to receive second configuration indication information sent by the second terminal; where the second configuration indication information is used for indicating a first sidelink resource used for sidelink transmission of the second terminal; and the first sidelink resource is determined by the second terminal according to the second configuration information and the third configuration information; and the processing module 12 is further configured to determine the target sidelink resource among the plurality of candidate sidelink resources as the first sidelink resource according to the second configuration indication information.

The communication apparatus 1 is the second terminal. The communication apparatus 1 includes a transceiving module 11 configured to resource configuration information sent by a first terminal; where the resource configuration information is used for indicating a target sidelink resource used for sidelink transmission of the second terminal; and a processing module 12 configured to determine the target sidelink resource among a plurality of candidate sidelink resources according to the resource configuration information.

In some embodiments, the transceiving module 11 is further configured to send configuration indication information including the target sidelink resource to the first terminal.

In some embodiments, the transceiving module 11 is further configured to receive first configuration information sent by the first terminal based on a unicast connection; where the first configuration information is used for indicating a corresponding relationship between a sidelink service attribute and each of the plurality of candidate sidelink resources.

In some embodiments, the transceiving module 11 is further configured to receive a service indication message and first configuration information that are sent by the first terminal based on the unicast connection; where the service indication message is used for indicating a to-be-executed sidelink service of the second terminal; and the first configuration information is used for indicating a corresponding relationship between a sidelink service attribute and each of the plurality of candidate sidelink resources.

In some embodiments, the processing module 12 is further configured to determine a target sidelink service attribute corresponding to the to-be-executed sidelink service; and determine the target sidelink resource among the plurality of candidate sidelink resources according to the corresponding relationship and the target sidelink service attribute corresponding to the to-be-executed sidelink service.

In some embodiments, the sidelink service attribute includes at least one of: a quality of service (QoS); a sidelink destination address; a transmitting file Tx profile; a logic channel for sidelink data transmission; or a carrier for sidelink data transmission.

In some embodiments, the transceiving module 11 is further configured to send a first resource indication message to a network side device; where the first resource indication message is used for indicating the corresponding relationship between the sidelink service attribute and each of the plurality of candidate sidelink resources.

In some embodiments, the transceiving module 11 is further configured to receive second configuration information sent by the first terminal; where the second configuration information is used for indicating a first sidelink resource used for sidelink transmission of the first terminal.

In some embodiments, the first sidelink resource is a first frequency band or a first frequency band combination, where the transceiving module 11 is further configured to: receive a first sidelink frequency band list sent and supported by the first terminal; or, receive a first sidelink frequency band list and/or a first index sent and supported by the first terminal based on a unicast connection; where the first index indicates a first frequency band on a specific position in the first sidelink frequency band list; or, receive a first sidelink frequency band combination list sent and supported by the first terminal; or, receive a first sidelink frequency band combination list and/or a second index sent and supported by the first terminal based on the unicast connection; where the second index indicates a first frequency band combination on a specific position in the first sidelink frequency band list.

In some embodiments, the transceiving module 11 is further configured to receive third configuration information sent by the first terminal; where the third configuration information is used for indicating a second sidelink resource suggested to be used for sidelink transmission of the second terminal.

In some embodiments, the second sidelink resource is a second frequency band or a second frequency band combination, where the transceiving module 11 is further configured to: receive a second sidelink frequency band list sent and supported by the first terminal; or, receive a second sidelink frequency band list and/or a third index sent by the first terminal based on the unicast connection and suggested to be used for sidelink transmission of the second terminal; where the third index indicates a second frequency band on a specific position in the second sidelink frequency band list; or, receive a second sidelink frequency band combination list sent and supported by the first terminal; or, receive a second sidelink frequency band combination list and/or a fourth index sent by the first terminal based on the unicast connection and suggested to be used for sidelink transmission of the second terminal; where the fourth index indicates a second frequency band combination on a specific position in the second sidelink frequency band list.

In some embodiments, the transceiving module 11 is further configured to send a second resource indication message to the network side device; where the second resource indication message is used for indicating a second sidelink resource suggested to be used for sidelink transmission of the second terminal.

In some embodiments, the processing module 12 is further configured to, in response to receiving the second configuration information sent by the first terminal, determine the target sidelink resource among the plurality of candidate sidelink resources as the first sidelink resource according to the second configuration information.

In some embodiments, the processing module 12 is further configured to, in response to receiving the second configuration information sent by the first terminal, determine that a configuration of the second configuration information is accepted, and determine the target sidelink resource among the plurality of candidate sidelink resources as the first sidelink resource according to the accepted second configuration information.

In some embodiments, the processing module 12 is further configured to, in response to receiving the second configuration information and the third configuration information that are sent by the first terminal, determine, according to the third configuration information, that a configuration indicated by the second configuration information is accepted, and determine the target sidelink resource among the plurality of candidate sidelink resources as the first sidelink resource.

In some embodiments, the transceiving module 11 is further configured to send second configuration indication information to the first terminal; where the second configuration indication information is used for indicating a first sidelink resource used for sidelink transmission of the second terminal.

In some embodiments, the transceiving module 11 is further configured to send a third resource indication message to the network side device; where the third resource indication message is used for indicating the target sidelink resource used for sidelink transmission of the second terminal as the first sidelink resource.

In some embodiments, the processing module 12 is further configured to, in response to receiving the second configuration information sent by the first terminal, refuse to accept the configuration of the second configuration information, and send a refusal indication to the first terminal.

In some embodiments, the processing module 12 is further configured to, in response to receiving the second configuration information and the third configuration information that are sent by the first terminal, determine, according to the third configuration information, that a configuration indicated by the second configuration information is refused to be accepted, and send a refusal indication to the first terminal.

In some embodiments, the transceiving module 11 is further configured to send the refusal indication to the first terminal on a third sidelink resource used for establishing a unicast connection with the first terminal.

In some embodiments, the transceiving module 11 is further configured to send the refusal indication to the first terminal on a fourth sidelink resource; where the fourth sidelink resource is configured by the network side device or specified in a protocol.

In some embodiments, the transceiving module 11 is further configured to receive second configuration indication information sent by the network side device; where the second configuration indication information is used for indicating the fourth sidelink resource.

The communication apparatus 1 is the network side device. The communication apparatus 1 includes a transceiving module 11 configured to send configuration indication information to a first terminal; where the configuration indication information is used for indicating a target sidelink resource among a plurality of candidate sidelink resources supported by the first terminal and used for sidelink transmission with a second terminal.

In some embodiments, the transceiving module 11 is further configured to send first configuration indication information to the first terminal; where the first configuration indication information is used for indicating a corresponding relationship between a sidelink service attribute and each of the plurality of candidate sidelink resources.

In some embodiments, the sidelink service attribute includes at least one of: a quality of service (QoS); a sidelink destination address; a transmitting file Tx profile; a logic channel for sidelink data transmission; or a carrier for sidelink data transmission.

In some embodiments, the transceiving module 11 is further configured to receive a first resource indication message sent by the second terminal connected to the first terminal; where the first resource indication message is used for indicating the corresponding relationship between the sidelink service attribute and each of the plurality of candidate sidelink resources, and the corresponding relationship between the sidelink service attribute and each of the plurality of candidate sidelink resources is determined by the second terminal according to first configuration information sent by the first terminal.

In some embodiments, the transceiving module 11 is further configured to receive a second resource indication message sent by the second terminal connected to the first terminal; where the second resource indication message is used for indicating a second sidelink resource suggested to be used for sidelink transmission of the second terminal, and the second sidelink resource is determined by the second terminal according to second configuration information sent by the first terminal.

In some embodiments, the transceiving module 11 is further configured to receive a third resource indication message sent by the second terminal connected to the first terminal; where the third resource indication message is used for indicating the target sidelink resource used for sidelink transmission of the second terminal as a first sidelink resource, and the first sidelink resource is determined by the second terminal according to second configuration information and/or third configuration information sent by the first terminal.

In some embodiments, the transceiving module 11 is further configured to send second configuration indication information to the second terminal connected to the first terminal; where the second configuration indication information is used for indicating a fourth sidelink resource.

For the communication apparatus 1 in the above-mentioned embodiments, a specific way for operation performed by each module has been described in detail in the embodiments of the method, detailed descriptions thereof will be omitted herein. The communication apparatus 1 provided in the above-mentioned embodiments of the present invention achieves the same or similar beneficial effects as the communication method provided in some embodiments mentioned above, which will be no longer repeated herein.

Refer to FIG. 18 which is a schematic structural diagram of a communication apparatus 1000 provided in an embodiment of the present invention, the communication apparatus 1000 may be a first terminal, or a second terminal, or a chip, a chip system or a processor, etc. supporting the terminal to implement the above-mentioned method. The communication apparatus 1000 may be used for implementing the method described in the above-mentioned method embodiments, which may specifically refer to the description for the above-mentioned method embodiments.

The communication apparatus 1000 may include one or more processors 1001. The processor 1001 may be a general-purpose processor or a special-purpose processor, etc. For example, the processor may be a baseband processor or a central processor. The baseband processor may be used for processing a communication protocol and communication data, and the central processor may be used for controlling a communication apparatus (such as a base station, a baseband chip, a terminal device, a terminal device chip, and a DU or a CU), executing a computer program, and processing data of the computer program.

Optionally, the communication apparatus 1000 may further include one or more memories 1002 in which a computer program 1004 may be stored, and the memory 1002 executes the computer program 1004, so that the communication apparatus 1000 performs the method described in the above-mentioned method embodiments. Optionally, the memory 1002 may further store data. The communication apparatus 1000 and the memory 1002 may be disposed alone or integrated together.

Optionally, the communication apparatus 1000 may further include a transceiver 1005 and an antenna 1006. The transceiver 1005 may be referred to as a transceiving unit, a transceiving machine, or a transceiving circuit, etc., and is used for achieving a transceiving function. The transceiver 1005 may include a receiver and a sender, the receiver may be referred to as a receiving machine or a receiving circuit, etc., and is used for achieving a receiving function; and the sender may be referred to as a sending machine or a sending circuit, etc., and is used for achieving a sending function.

Optionally, the communication apparatus 1000 may further include one or more interface circuits 1007. The interface circuit 1007 is used for receiving code instructions and transmitting the code instructions to the processor 1001. The processor 1001 runs the code instructions, so that the communication apparatus 100 performs the method described in the above-mentioned method embodiments.

The communication apparatus 1000 is a first terminal: the transceiver 1005 is used for performing S21 in FIG. 2; S31 in FIG. 3; S41 in FIG. 4; and S51 in FIG. 5; and the processor 1001 is used for performing S22 in FIG. 2; S32 in FIG. 3; S42 in FIG. 4; and S52 in FIG. 5.

The communication apparatus 1000 is a second terminal: the transceiver 1005 is used for performing S61 in FIG. 6; S71 in FIG. 7; S81 in FIG. 8; S91 in FIG. 9; S101 in FIG. 10; Sill in FIG. 11; S121 in FIG. 12; S131 in FIG. 13; and S141 in FIG. 14; and the processor 1001 is used for performing S62 in FIG. 6; S72 in FIG. 7; S82 in FIG. 8; S92 in FIG. 9; S102 in FIG. 10; S112 in FIG. 11; S122 in FIG. 12; S132 in FIG. 13; and S142 in FIG. 14.

The communication apparatus 1000 is a network side device: the transceiver 1005 is used for performing S151 in FIG. 15; and S161 in FIG. 16.

In an implementation, the processor 1001 may include a transceiver used for achieving receiving and sending functions. For example, the transceiver may be a transceiving circuit, or an interface, or an interface circuit. The transceiving circuit, the interface or the interface circuit used for achieving the receiving and sending functions may be separated or integrated together. The above-mentioned transceiving circuit, interface or interface circuit may be used for reading and writing codes/data, or the above-mentioned transceiving circuit, interface or interface circuit may be used for transmitting or delivering signals.

In an implementation, the processor 1001 may store a computer program 1003, and the computer program 1003 runs on the processor 1001, so that the communication apparatus 1000 performs the method described in the above-mentioned method embodiments. The computer program 1003 may be solidified in the processor 1001, in this case, the processor 1001 may be achieved by hardware.

In an implementation, the communication apparatus 1000 may include a circuit which may achieve the sending or receiving or communication function in the above-mentioned method embodiments. The processor and the transceiver that are described in the present invention may be achieved on an integrated circuit (IC), an analog IC, a radio frequency integrated circuit (RFIC), a mixed signal IC, an application specific integrated circuit (ASIC), a printed circuit board (PCB), an electronic device, etc. The processor and the transceiver may also be made by using various IC process technologies, such as a complementary metal oxide semiconductor (CMOS), an nMetal-oxide-semiconductor (NMOS), a positive channel metal oxide semiconductor (PMOS), a bipolar junction transistor (BJT), a bipolar CMOS (BiCMOS), silicon germanium (SiGe), and gallium arsenide (GaAs).

The communication apparatus described in above embodiments may be a terminal (such as the first terminal or the second terminal in the above-mentioned method embodiments), however, the scope of the communication apparatus described in the present invention is not limited thereto, and it is possible that the structure of the communication apparatus is not limited by FIG. 18. The communication apparatus may be an independent device or a part of a larger device. For example, the communication apparatus may be: (1) an independent integrated circuit (IC), or a chip, or a chip system, or a subsystem; (2) a set provided with one or more ICs, and optionally, the set of the ICs may also include a storage component used for storing data and a computer program; (3) an ASIC, such as a Modem; (4) a module that may be embedded into other devices; (5) a receiver, a terminal device, a smart terminal device, a cell phone, a wireless device, a handset, a mobile unit, a vehicle-mounted device, a network side device, a cloud device, an artificial intelligent device, etc.; and (6) other devices, etc.

A situation that the communication apparatus may be a chip or a chip system refers to FIG. 19 which is a structural diagram of a chip provided in an embodiment of the present invention. The chip 1100 includes a processor 1101 and an interface 1103. There may be one or more processors 1101, and there may be a plurality of interfaces 1103.

For a situation that the chip is used for achieving the function of the first terminal in the embodiments of the present invention: the interface 1103 is configured to receive code instructions and transmit the code instructions to the processor; and the processor 1101 is configured to run the code instructions so as to perform the sidelink communication method according to some of the above-mentioned embodiments.

For a situation that the chip is used for achieving the function of the second terminal in the embodiment of the present invention: the interface 1103 is configured to receive code instructions and transmit the code instructions to the processor; and the processor 1101 is configured to run the code instructions so as to perform the sidelink communication method according to some of the above-mentioned embodiments.

For a situation that the chip is used for achieving the function of the network side device in the embodiments of the present invention: the interface 1103 is configured to receive code instructions and transmit the code instructions to the processor; and the processor 1101 is configured to run the code instructions so as to perform the sidelink communication method according to some of the above-mentioned embodiments.

Optionally, the chip 1100 further includes a memory 1102, the memory 1102 is configured to store a necessary computer program and data.

It can be further known by the skilled in the art that various illustrative logical blocks and steps listed in the embodiments of the present invention can be achieved through electronic hardware, computer software or a combination thereof. Whether such a function is achieved by hardware or software depends on a specific application and design requirements of a whole system. For each specific application, the skilled in the art can achieve the function by using various methods, however, such an achievement should be understood as falling within the protection scope of the embodiments of the present invention.

An embodiment of the present invention further provides a system for information transmission, the system includes a sidelink communication apparatus as a first terminal and a sidelink communication apparatus as a second terminal in the above-mentioned embodiment shown in FIG. 17, or the system includes a communication apparatus as a first terminal and a communication apparatus as a second terminal in above-mentioned embodiment shown in FIG. 18.

The present invention further provides a readable storage medium having instructions stored thereon, and the instructions, when executed by a computer, implementing the function in any one of the above-mentioned method embodiments.

The present invention further provides a computer program product which, when executed by a computer, implements the function in any one of the above-mentioned method embodiments.

The above-mentioned embodiments can be entirely or partially achieved through software, hardware, firmware or any combinations thereof. When achieved by using the software, the embodiments can be entirely or partially achieved in a form of a computer program product. The computer program product includes one or more computer programs. When the computer programs are loaded and executed on a computer, processes or functions based on the embodiments of the present invention are entirely or partially generated. The computer may be a general-purpose computer, a special-purpose computer, a computer network, or other programmable apparatuses. The computer programs may be stored in a computer-readable storage medium, or transmitted from one computer-readable storage medium to another computer-readable storage medium, for example, the computer programs may be transmitted from one website, computer, server or data center to another website, computer, server or data center in a wired (such as a coaxial cable, an optical fiber, and a digital subscriber line (DSL)) or wireless (such as infrared, wireless, and microwave) way. The computer-readable storage medium may be any available medium that may be accessed by the computer or an integrated data storage device such as a server and a data center including one or more available media. The available medium can be a magnetic medium (such as a floppy disk, a hard disk, and a cassette), an optical medium (such as a high-density digital video disc (DVD)), or a semiconductor medium (such as a solid state disk (SSD)), etc.

It can be understood by those of ordinary skill in the art that various digital numbers such as first and second involved in the present invention are only for distinguishing for facilitating description, are not intended to limit the scope of the embodiments of the present invention, but also denote a chronological order.

At least one in the present invention may be described as one or more, a plurality of may be two, three, four or more, which is not limited in the present invention. In the embodiments of the present invention, for a technical feature, technical features in such a technical feature are distinguished by "first", "second", "third", "A", "B", "C", "D", etc., and there are no chronological or size order among the technical features described by the "first", "second", "third", "A", "B", "C", and "D".

A corresponding relationship shown in each table in the present invention may be configured or predefined. A value of information in each table is only example, and other values may be configured, which is not limited in the present invention. When a corresponding relationship between the information and each parameter is configured, it is not necessarily required to configure all corresponding relationships shown in each table. For example, in the tables in the present invention, it is also possible that corresponding relationships shown in certain lines are not configured. For another example, appropriate deformation adjustment, such as splitting and merging, may be made based on the above-mentioned tables. Names of parameters shown in titles in each of the above-mentioned tables may also adopt other names that may be understood by the communication apparatus, and the values or expressions of the parameters thereof may also adopt other values or expressions that may be understood by the communication apparatus. During implementation, each of the above-mentioned tables may also adopt other data structures, such as arrays, queues, containers, stacks, linear tables, pointers, linked lists, trees, graphs, structures, classes, heaps, and hash tables or Hash tables.

Pre-definition in the present invention may be understood as definition, preliminary definition, storage, pre-storage, pre-negotiation, pre-configuration, solidification, or pre-burning.

Those of ordinary skill in the art can realize that units and algorithm steps in all examples described in conjunction with the embodiments disclosed in the present invention can be achieved by electronic hardware, computer software or a combination of both. Whether these functions are achieved by hardware or software depends on specific applications and design constraints of technical solutions. The skilled in the art may adopt different methods to achieve the described functions in each specific application, which, however, should be considered as falling within the scope of the present invention.

It can be clearly known by the skilled in the art that, for facilitating and simplifying the description, specific working processes of the above-mentioned system, apparatus and unit may refer to corresponding processes in the above-mentioned method embodiments so as to be no longer repeated herein.

The above descriptions are only specific implementations of the present invention, but the protection scope of the present invention is not limited thereto. Any variations or replacements that can be readily envisioned by those skilled in the art within the technical scope disclosed by the present invention should fall within the protection scope of the present invention. Therefore, the protection scope of the present invention should be subject to the protection scope defined in the claims.

## Claims

1. A sidelink communication method, performed by a first terminal, the method comprising:
receiving configuration indication information sent by a network side device or a second terminal; and
determining, according to the configuration indication information, a target sidelink resource used for sidelink transmission among a plurality of candidate sidelink resources.

2. The method according to claim 1, wherein receiving the configuration indication information sent by the network side device, and determining, according to the configuration indication information, the target sidelink resource used for the sidelink transmission among the plurality of candidate sidelink resources comprises:
receiving first configuration indication information sent by the network side device, wherein the first configuration indication information is used for indicating a corresponding relationship between a sidelink service attribute and each of the plurality of candidate sidelink resources; and
determining the target sidelink resource among the plurality of candidate sidelink resources according to the corresponding relationship and a target sidelink service attribute corresponding to a to-be-executed sidelink service.

3. The method according to claim 2, wherein the sidelink service attribute comprises at least one of:
a quality of service (QoS);
a sidelink destination address;
a transmitting file Tx profile;
a logic channel for sidelink data transmission; or
a carrier for sidelink data transmission.

4. The method according to claim 2 or 3, further comprising:
sending first configuration information to the second terminal, wherein the first configuration information is used for indicating the corresponding relationship between the sidelink service attribute and each of the plurality of candidate sidelink resources.

5. The method according to any one of claims 1 to 4, further comprising:
sending sidelink information corresponding to the to-be-executed sidelink service to the second terminal on the target sidelink resource; or
receiving sidelink information sent by the second terminal and corresponding to the to-be-executed sidelink service on the target sidelink resource.

6. The method according to claim 1, further comprising:
sending second configuration information to the second terminal, wherein the second configuration information is used for indicating a first sidelink resource used for sidelink transmission of the first terminal.

7. The method according to claim 6, wherein the first sidelink resource is a first frequency band or a first frequency band combination, wherein sending the second configuration information to the second terminal comprises:
sending a first sidelink frequency band list used for the sidelink transmission of the first terminal to the second terminal; or
sending a first sidelink frequency band list and/or a first index supported by the first terminal to the second terminal, wherein the first index indicates a first frequency band on a specific position in the first sidelink frequency band list; or
sending a first sidelink frequency band combination list used for the sidelink transmission of the first terminal to the second terminal; or
sending a first sidelink frequency band combination list and/or a second index supported by the first terminal to the second terminal, wherein the second index indicates a first frequency band combination on a specific position in the first sidelink frequency band list.

8. The method according to claim 6 or 7, wherein receiving the configuration indication information sent by the second terminal, and determining, according to the configuration indication information, the target sidelink resource used for the sidelink transmission among the plurality of candidate sidelink resources comprises:
receiving second configuration indication information sent by the second terminal, wherein the second configuration indication information is used for indicating the first sidelink resource used for sidelink transmission of the second terminal, and the first sidelink resource is determined by the second terminal according to the second configuration information; and
determining the target sidelink resource among the plurality of candidate sidelink resources as the first sidelink resource according to the second configuration indication information.

9. The method according to claim 6 or 7, further comprising:
sending third configuration information to the second terminal; wherein the third configuration information is used for indicating a second sidelink resource suggested to be used for sidelink transmission of the second terminal.

10. The method according to claim 9, wherein the second sidelink resource is a second frequency band or a second frequency band combination, wherein sending the third configuration information to the second terminal comprises:
sending a second sidelink frequency band list used for the sidelink transmission of the first terminal to the second terminal; or
sending a second sidelink frequency band list and/or a third index suggested to be used for the sidelink transmission of the second terminal to the second terminal, wherein the third index indicates a second frequency band on a specific position in the second sidelink frequency band list; or
sending a second sidelink frequency band combination list used for the sidelink transmission of the first terminal to the second terminal; or
sending a second sidelink frequency band combination list and/or a fourth index suggested to be used for the sidelink transmission of the second terminal to the second terminal, wherein the fourth index indicates a second frequency band combination on a specific position in the second sidelink frequency band list.

11. The method according to claim 9 or 10, wherein receiving the configuration indication information sent by the second terminal, and determining, according to the configuration indication information, the target sidelink resource used for the sidelink transmission among the plurality of candidate sidelink resources comprises:
receiving second configuration indication information sent by the second terminal, wherein the second configuration indication information is used for indicating a first sidelink resource used for sidelink transmission of the second terminal, and the first sidelink resource is determined by the second terminal according to the second configuration information and the third configuration information; and
determining the target sidelink resource among the plurality of candidate sidelink resources as the first sidelink resource according to the second configuration indication information.

12. A sidelink communication method, performed by a second terminal, the method comprising:
receiving resource configuration information sent by a first terminal; wherein the resource configuration information is information used for indicating a target sidelink resource used for sidelink transmission of the second terminal; and
determining the target sidelink resource among a plurality of candidate sidelink resources according to the resource configuration information.

13. The method according to claim 12, further comprising:
sending configuration indication information comprising the target sidelink resource to the first terminal.

14. The method according to claim 12, wherein receiving the resource configuration information sent by the first terminal comprises:
receiving first configuration information sent by the first terminal; wherein the first configuration information is used for indicating a corresponding relationship between a sidelink service attribute and each of the plurality of candidate sidelink resources.

15. The method according to claim 12, wherein receiving the resource configuration information sent by the first terminal comprises:
receiving a service indication message and first configuration information that are sent by the first terminal; wherein the service indication message is used for indicating a to-be-executed sidelink service of the second terminal; and the first configuration information is used for indicating a corresponding relationship between a sidelink service attribute and each of the plurality of candidate sidelink resources.

16. The method according to claim 14 or 15, wherein determining the target sidelink resource according to the resource configuration information comprises:
determining a target sidelink service attribute corresponding to the to-be-executed sidelink service; and
determining the target sidelink resource among the plurality of candidate sidelink resources according to the corresponding relationship and the target sidelink service attribute corresponding to the to-be-executed sidelink service.

17. The method according to any one of claims 15 to 16, wherein the sidelink service attribute comprises at least one of:
a quality of service (QoS);
a sidelink destination address;
a transmitting file Tx profile;
a logic channel for sidelink data transmission; or
a carrier for sidelink data transmission.

18. The method according to any one of claims 14 to 17, further comprising:
sending a first resource indication message to a network side device, wherein the first resource indication message is used for indicating the corresponding relationship between the sidelink service attribute and each of the plurality of candidate sidelink resources.

19. The method according to claim 12, wherein receiving the resource configuration information sent by the first terminal comprises:
receiving second configuration information sent by the first terminal; wherein the second configuration information is used for indicating a first sidelink resource used for sidelink transmission of the first terminal.

20. The method according to claim 19, wherein the first sidelink resource is a first frequency band or a first frequency band combination, wherein receiving the second configuration information sent by the first terminal comprises:
receiving a first sidelink frequency band list sent and supported by the first terminal; or
receiving a first sidelink frequency band list and/or a first index sent and supported by the first terminal based on a unicast connection, wherein the first index indicates a first frequency band on a specific position in the first sidelink frequency band list; or
receiving a first sidelink frequency band combination list sent and supported by the first terminal; or
receiving a first sidelink frequency band combination list and/or a second index sent and supported by the first terminal based on the unicast connection, wherein the second index indicates a first frequency band combination on a specific position in the first sidelink frequency band list.

21. The method according to claim 19 or 20, further comprising:
receiving third configuration information sent by the first terminal, wherein the third configuration information is used for indicating a second sidelink resource suggested to be used for the sidelink transmission of the second terminal.

22. The method according to claim 21, wherein the second sidelink resource is a second frequency band or a second frequency band combination, wherein receiving the third configuration information sent by the first terminal based on the unicast connection comprises:
receiving a second sidelink frequency band list sent and supported by the first terminal; or
receiving a second sidelink frequency band list and/or a third index sent by the first terminal based on the unicast connection and suggested to be used for the sidelink transmission of the second terminal, wherein the third index indicates a second frequency band on a specific position in the second sidelink frequency band list; or
receiving a second sidelink frequency band combination list sent and supported by the first terminal; or
receiving a second sidelink frequency band combination list and/or a fourth index sent by the first terminal based on the unicast connection and suggested to be used for the sidelink transmission of the second terminal, wherein the fourth index indicates a second frequency band combination on a specific position in the second sidelink frequency band list.

23. The method according to claim 21 or 22, further comprising:
sending a second resource indication message to the network side device, wherein the second resource indication message is used for indicating a second sidelink resource suggested to be used for the sidelink transmission of the second terminal.

24. The method according to any one of claims 19 to 23, wherein determining the target sidelink resource according to the resource configuration information comprises:
in response to receiving the second configuration information sent by the first terminal, determining the target sidelink resource among the plurality of candidate sidelink resources as the first sidelink resource according to the second configuration information.

25. The method according to claim 21 or 22, wherein determining the target sidelink resource according to the resource configuration information comprises:
in response to receiving the second configuration information sent by the first terminal, determining that a configuration of the second configuration information is accepted, and determining the target sidelink resource among the plurality of candidate sidelink resources as the first sidelink resource according to the accepted second configuration information.

26. The method according to any one of claims 19 to 23, wherein determining the target sidelink resource according to the resource configuration information comprises:
in response to receiving the second configuration information and the third configuration information that are sent by the first terminal, determining, according to the third configuration information, that a configuration indicated by the second configuration information is accepted, and determining the target sidelink resource among the plurality of candidate sidelink resources as the first sidelink resource.

27. The method according to any one of claims 24 to 26, further comprising:
sending second configuration indication information to the first terminal; wherein the second configuration indication information is used for indicating a first sidelink resource used for the sidelink transmission of the second terminal.

28. The method according to any one of claims 24 to 26, further comprising:
sending a third resource indication message to the network side device; wherein the third resource indication message is used for indicating the target sidelink resource used for the sidelink transmission of the second terminal as the first sidelink resource.

29. The method according to any one of claims 19 to 23, wherein determining the target sidelink resource according to the resource configuration information comprises:
in response to receiving the second configuration information sent by the first terminal, refusing to accept the configuration of the second configuration information, and sending a refusal indication to the first terminal.

30. The method according to any one of claims 21 to 23, wherein determining the target sidelink resource according to the resource configuration information comprises:
in response to receiving the second configuration information and the third configuration information that are sent by the first terminal, determining, according to the third configuration information, that a configuration of the second configuration information is refused to be accepted, and sending a refusal indication to the first terminal.

31. The method according to claim 29 or 30, wherein sending the refusal indication to the first terminal comprises:
sending the refusal indication to the first terminal on a third sidelink resource used for establishing a unicast connection with the first terminal.

32. The method according to claim 29 or 30, wherein sending the refusal indication to the first terminal comprises:
sending the refusal indication to the first terminal on a fourth sidelink resource; wherein the fourth sidelink resource is configured by the network side device or specified in a protocol.

33. The method according to claim 32, further comprising:
receiving second configuration indication information sent by the network side device; wherein the second configuration indication information is used for indicating the fourth sidelink resource.

34. A sidelink communication method, performed by a network side device, the method comprising:
sending configuration indication information to a first terminal; wherein the configuration indication information is used for indicating a target sidelink resource among a plurality of candidate sidelink resources that are supported by the first terminal to perform sidelink transmission with a second terminal.

35. The method according to claim 34, wherein sending the configuration indication information to the first terminal comprises:
sending first configuration indication information to the first terminal; wherein the first configuration indication information is used for indicating a corresponding relationship between a sidelink service attribute and each of the plurality of candidate sidelink resources.

36. The method according to claim 35, wherein the sidelink service attribute comprises at least one of:
a quality of service (QoS);
a sidelink destination address;
a transmitting file Tx profile;
a logic channel for sidelink data transmission; or
a carrier for sidelink data transmission.

37. The method according to claim 35 or 36, further comprising:
receiving a first resource indication message sent by the second terminal connected to the first terminal; wherein the first resource indication message is used for indicating the corresponding relationship between the sidelink service attribute and each of the plurality of candidate sidelink resources, and the corresponding relationship between the sidelink service attribute and each of the plurality of candidate sidelink resources is determined by the second terminal according to first configuration information sent by the first terminal.

38. The method according to claim 35 or 36, further comprising:
receiving a second resource indication message sent by the second terminal connected to the first terminal; wherein the second resource indication message is used for indicating a second sidelink resource suggested to be used for sidelink transmission of the second terminal, and the second sidelink resource is determined by the second terminal according to second configuration information sent by the first terminal.

39. The method according to claim 35 or 36, further comprising:
receiving a third resource indication message sent by the second terminal connected to the first terminal; wherein the third resource indication message is used for indicating the target sidelink resource used for sidelink transmission of the second terminal as a first sidelink resource, and the first sidelink resource is determined by the second terminal according to second configuration information and/or third configuration information sent by the first terminal.

40. The method according to any one of claims 34 to 39, further comprising:
sending second configuration indication information to the second terminal connected to the first terminal, wherein the second configuration indication information is used for indicating a fourth sidelink resource.

41. A communication apparatus, comprising:
a transceiving module configured to receive configuration indication information sent by a network side device or a second terminal; and
a processing module configured to determine, according to the configuration indication information, a target sidelink resource used for sidelink transmission among a plurality of candidate sidelink resources.

42. A communication apparatus, comprising:
a transceiving module configured to receive resource configuration information sent by a first terminal; wherein the resource configuration information is used for indicating a target sidelink resource used for sidelink transmission of the second terminal; and
a processing module configured to determine the target sidelink resource among a plurality of candidate sidelink resources according to the resource configuration information.

43. A communication apparatus, comprising:
a transceiving module configured to send configuration indication information to a first terminal; wherein the configuration indication information is used for indicating a target sidelink resource used for sidelink transmission among a plurality of candidate sidelink resources of the first terminal.

44. A communication apparatus, comprising:
a processor, and
a memory for storing a computer program,
wherein the processor is configured to execute the computer program stored in the memory to cause the apparatus to perform the method according to any one of claims 1 to 33, or the method according to any one of claims 34 to 40.

45. A communication apparatus, comprising a processor and an interface circuit;
wherein the interface circuit is configured to receive code instructions and transmit the code instructions to the processor, and
the processor is configured to run the code instructions to perform the method according to any one of claims 1 to 33 or the method according to any one of claims 34 to 40.

46. A computer-readable storage medium for storing instructions that, when executed, enable the method according to any one of claims 1 to 33 or the method according to any one of claims 34 to 40 to be implemented.
